# EUROPÄISCHE PATENTSCHRIFT

(11) **EP 4 332 176 B1**
(45) Veröffentlichungstag und Bekanntmachung des Hinweises auf die Patenterteilung: **02.09.2026**
(21) Anmeldenummer: 22193722.0
(22) Anmeldetag: 02.09.2022
(51) Int. Cl.: C09D 5/00

(54) **WÄSSRIGE BESCHICHTUNGSZUSAMMENSETZUNG UND IHRE VERWENDUNG**
AQUEOUS COATING COMPOSITION AND USE THEREOF
COMPOSITION DE REVÊTEMENT AQUEUSE ET SON UTILISATION

(43) Veröffentlichungstag der Anmeldung: 06.03.2024
(73) Patentinhaber: EWALD DÖRKEN AG, 58313 Herdecke (DE)
(72) Erfinder: Wark, Reiner, 42103 Wuppertal (DE); Matthée, Nicole, 58313 Herdecke (DE); Kleinkorres, Angela, 58300 Wetter (DE); Smoll, Hanna, 58239 Schwerte (DE); von Rhein, Anastasia, 58769 Nachrodt-Wiblingwerde (DE); Kunka, Martin, 59192 Bergkamen (DE); Roth, Marcel, 40589 Düsseldorf (DE); Reusmann, Gerhard, 45259 Essen (DE); Kocak, Emre, 58509 Lüdenscheid (DE); Klüppel, Ingo, 58313 Herdecke (DE)
(74) Vertreter: Freiherr von Foullon, Alexander

(56) Entgegenhaltungen:
- US-A- 5 006 597

## Beschreibung

Die vorliegende Erfindung betrifft das technische Gebiet der Beschichtungen, insbesondere der Beschichtungen von Massenschüttgut.

Insbesondere betrifft die vorliegende Erfindung eine wässrige Beschichtungszusammensetzung zur Herstellung einer Beschichtung mit einstellbarer Reibzahl. Weiterhin betrifft die vorliegende Erfindung ein Verfahren zur Herstellung einer Beschichtung mit einstellbarer Reibzahl sowie die Verwendung einer wässrigen Beschichtungszusammensetzung zur Herstellung einer Beschichtung mit einstellbarer Reibzahl. Schließlich betrifft die vorliegende Erfindung ein beschichtetes Substrat.

Befestigungselemente, insbesondere Kleinteile wie Bolzen, Muttern und Schrauben, welche zur mechanischen Befestigung von Bauteilen, insbesondere Metallbauteilen verwendet werden, müssen reproduzierbar spezifische Reibzahlen aufweisen, damit sie industriell verarbeitet werden können.

Die Reibzahl µ, auch Reibungskoeffizient genannt, gibt das Verhältnis von Reibungskraft zu Normalkraft an; je höher der Reibungskoeffizient ist, um so höher ist auch die Reibungskraft. Je höher die Reibungskraft ist, um so weniger Energie geht im Verschraubungsprozess in die elastische oder plastische Längung der Schraube ein, mit der Folge einer verringerten sogenannten Vorspannkraft. Die Vorspannkraft ist üblicherweise vorgegeben, um eine sichere Leistung der Verschraubung zu gewährleisten, weshalb sich der Reibungskoeffizient in einen definierten Fenster bewegen muss. Dies ist insbesondere bei Befestigungsmaterialien, wie Bolzen, Schrauben, Muttern oder auch Nieten von besonderer Bedeutung, da diese zur rein mechanischen Befestigung von Bauteilen verwendet werden. Die Reibung muss einerseits ausreichend hoch sein, um ein unbeabsichtigtes Lösen der Verbindung zu verhindern, andererseits jedoch gleichzeitig gering genug, um eine vollständige und stoffschlüssige Verbindung zu ermöglichen.

Darüber hinaus müssen die Reibzahlen möglichst konstant eingestellt sein, damit eine industrielle Verarbeitung, insbesondere mittels Robotern, beispielsweise bei Schrauben mit definiertem Drehmoment oder bei Bolzennieten mit stets gleicher Kraft, möglich ist. Aus diesem Grund werden Befestigungskleinteile in der Praxis oftmals mit speziellen Beschichtungszusammensetzungen in Form von Topcoats beschichtet, welche die Gleit- und Reibeigenschaften der Teile in gewünschter Art und Weise einstellen und beeinflussen sollen.

Die gewünschten Gleit- und Reibeigenschaften von Schrauben oder Bolzen werden üblicherweise gemäß DIN EN ISO 16047:2013-01 bestimmt, wobei speziell für Schrauben vom Verband der Automobilhersteller (VDA) ein Fenster der Reibzahl µ von 0,09 bis 0,16 vorgegeben ist.

Um die gewünschten Reibzahlen einzustellen, enthalten entsprechende Topcoat-Zusammensetzungen in der Regel fluorierte Kunststoffpartikel, insbesondere auf Basis von Polyfluortetraethylen (PTFE) oder Polyvinylidenfluorid (PVDF).

So beschreibt das Dokument US 5 006 597 A lagerstabile, schwarz pigmentierte Beschichtungszusammensetzungen zur Bereitstellung von glatten, gleichmäßigen, eingebrannten Beschichtung, die speziell für die Verwendung als korrosionsbeständige Deckschicht über einem zuvor beschichteten Grundmetallsubstrat mit einer Beschichtung, die Chrom in nicht elementarer Form enthält, geeignet sind. Die Beschichtungszusammensetzung ist als eine einteilige, chromfreie und metallpartikelfreie Zusammensetzung mit einem pH-Wert von weniger als etwa 10 ausgelegt, wobei die Zusammensetzung eine wässrige kolloidale Dispersion von Ruß , die mindestens etwa 0,5 Gew.-% Rußpigment zu der Zusammensetzung beisteuert, ein Verdickungsmittel in einer Menge von weniger als etwa 2 Gew.-% des Verdickungsmittels, bezogen auf das Flächengewicht der Zusammensetzung, etwa 1 bis 40 Gew.-% eines wässrigen Kieselsäuresols mit einem pH-Wert von nicht über etwa 10, mehr als etwa 0,2 Gew.-% amorphe Kieselsäure und etwa 4 bis 40 Gew.-% einer wässrigen Acrylharzdispersion enthält. Die Zusammensetzung kann außerdem ein Schmiermittel enthalten, dass bevorzugt ein fluorierter Kohlenwasserstoff ist.

Die WO 2009/095375 A1 betrifft ein Verfahren zur Beschichtung metallischer Oberflächen mit einer wässrigen Schmierstoffzusammensetzung, die insbesondere für die Kaltumformung von Metallwerkstücken vorgesehen ist. Die Zusammensetzung enthält ein wasserlösliches, wasserhaltiges oder wasserbindendes Oxid oder Silicat, beispielsweise Wasserglas, sowie ein organisches polymeres Material, etwa Ionomere oder Polymere und Copolymere auf Basis von Acryl- oder Methacrylsäure, Epoxid, Ethylen, Polyamid, Propylen, Styrol oder Urethan. Gegebenenfalls können weitere Bestandteile wie Fettschmierstoffe, Reibwertminderer oder andere Additive enthalten sein

Die Verwendung per- oder teilfluorierter Verbindungen hat jedoch mehrere gravierende Nachteile: So sind zum einen fluorierte Polymere relativ teuer und zum anderen unter Gesichtspunkten des Umweltschutzes besser zu vermeiden. Bei der Herstellung von fluorierten Verbindungen, insbesondere PTFE, fallen üblicherweise nicht unerhebliche Mengen an Perfluoroctansäure (PFOA, perfluoro octanic acid) an bzw. werden zur Herstellung dieser Verbindungen verwendet. Perfluoroctansäure wird in der Natur nahezu nicht abgebaut, in lebenden Organismen akkumuliert und weist insbesondere leberschädigende, reproduktionstoxische und krebserregende Eigenschaften auf. Die Herstellung von Perfluoroctansäure und ihrer Vorläuferverbindungen ist daher, von wenigen Ausnahmen abgesehen, in der Europäischen Union seit dem 4. Juli 2020 verboten.

Darüber hinaus fallen auch bei der Herstellung oder Verwendung von PTFE polyfluorierte Neben- und Abbauprodukte an, welche nach Möglichkeit nicht in die Umwelt gelangen dürfen.

Aus diesem Grund gibt es Bestrebungen, polyfluorierte Kunststoffe nach Möglichkeit durch andere Materialien zu ersetzen. Dieser Austausch ist jedoch oftmals nicht leicht, da poly- oder perfluorierte Kunststoffe besondere und teilweise herausragende Eigenschaften aufweisen, insbesondere im Hinblick auf ihre hydrophoben Benetzungs- bzw. Nichtbenetzungseigenschaften, ihre Beständigkeit gegenüber chemischen und physikalischen Einflüssen sowie ihre hervorragenden Gleiteigenschaften.

Ein Problem, welches insbesondere bei Verschraubungen auftritt, ist das Warmlöseverhalten, da sich die Gleiteigenschaften von vielen Kunststoffen bei erhöhter Temperatur ändern. Insbesondere verbessern sich die Gleiteigenschaften vieler Kunststoffe bei Erwärmung. Dies ist jedoch bei Verschraubungen unerwünscht, da andernfalls die Gefahr einer unbeabsichtigten Verbindungslösung besteht. Perfluorierte Kunststoffe, insbesondere PTFE und PVDF, zeigen dieses problematische Verhalten nicht bzw. nur in geringem Maße, sodass sie bis heute immer noch das Mittel der Wahl sind, um die Gleit- bzw. Reibeigenschaften von Befestigungsmitteln gezielt einzustellen. PTFE zeichnet sich insbesondere durch seinen hohen Schmelzpunkt aus, wodurch das Reibungsverhalten in höheren Temperaturbereichen optimiert werden kann.

Ein weiteres Problem, welches insbesondere bei Verschraubung mit hohen Drehzahlen auftritt, ist der sogenannte Stick-Slip-Effekt, auch Ruckgleiten genannt. Hierbei wird die Schraube beim Eindrehen nicht mehr gleichmäßig bewegt, sondern geht in ein Haften und Gleiten über. Hierdurch entsteht zum einen eine Drehmomentunsicherheit und zum anderen eine Vorspannkraftunsicherheit, was wiederum zu einer versteckten Versagensgefahr im Betrieb führen kann. Stick-Slip-Effekte sind daher nach Möglichkeit zu vermeiden, weshalb die Gleit- und Hafteigenschaften von Schrauben besonders genau und gleichmäßig einzustellen sind. Stick-Slip-Effekte lassen sich bislang nur durch die Verwendung fluorpolymerhaltiger Topcoats weitgehend verhindern.

Ein Nachteil fluorierter Polymere ist jedoch, dass sie aufgrund ihrer Hydrophobizität vorzugsweise in lösemittelbasierten Systemen eingesetzt werden sollten. Aus Gründen des Umwelt- und Arbeitsschutzes werden allerdings wässrige Systeme zunehmend bevorzugt.

Ein weiteres Problem ist, dass die Werte der Reibzahl auch bei Verwendung fluorpolymerhaltiger Topcoats oftmals einer starken Streuung unterliegen, d.h. dass beispielsweise die Reibzahlen einzelner mit dem gleichen Topcoat beschichteter Schrauben stark voneinander abweichen. Hier wäre ein Topcoat, welcher die die Streuung der Reibzahlwerte auf einen kleineren Bereich begrenzt, wünschenswert, um die Qualität von Verschraubungen noch weiter zu erhöhen.

Es fehlt im Stand der Technik bislang an einem wässrigen Beschichtungssystem, welches die gezielte Einstellung der Reibzahlen von insbesondere Befestigungskleinteilen ermöglicht und welches ohne den Einsatz fluorierter Polymere auskommt, vorzugsweise gänzlich ohne den Einsatz fluorierter Polymere, und dies unter Einhaltung der Anforderungen an das eng definierte Reibzahlfenster, das Warmlösen sowie das Stick-Slip Verhalten.

Eine Aufgabe der vorliegenden Erfindung ist somit darin zu sehen, eine Beschichtungszusammensetzung bereitzustellen, welche eine exakte Einstellung der Reibzahlen von Bauteilen, insbesondere Befestigungsteilen, wie insbesondere Schrauben, Muttern, Bolzen oder Nieten, ermöglicht und welches darüber hinaus ohne die Verwendung von PTFE auskommt, und vorzugsweise gänzlich auf fluorierte Polymere verzichtet.

Darüber hinaus ist eine Aufgabe der vorliegenden Erfindung darin zu sehen, ein Beschichtungssystem bereitzustellen, welches zumindest weitgehend ohne organische Lösemittel auskommt und vorzugsweise frei ist von organischen Lösemitteln.

Eine weitere Aufgabe der vorliegenden Erfindung ist darin zu sehen, ein Beschichtungssystem bereitzustellen, welches Stick-Slip-Effekte weitestgehend verhindert.

Schließlich ist eine Aufgabe der vorliegenden Erfindung, die Streuung der Reibzahl zu minimieren.

Gegenstand der vorliegenden Erfindung gemäß einem ersten Erfindungsaspekt ist somit eine wässrige Beschichtungszusammensetzung nach Anspruch 1; weitere vorteilhafte Ausgestaltungen dieses Erfindungsaspekt sind Gegenstand der diesbezüglichen Unteransprüche.

Wiederum weiterer Gegenstand der vorliegenden Erfindung gemäß einem zweiten Aspekt der vorliegenden Erfindung ist die Verwendung einer Beschichtungszusammensetzung nach Anspruch 9.

Wiederum weiterer Gegenstand der vorliegenden Erfindung gemäß einem dritten Aspekt der vorliegenden Erfindung ist ein Verfahren zur Herstellung einer Beschichtung nach Anspruch 10; weitere, vorteilhafte Ausgestaltungen dieses Erfindungsaspektes sind Gegenstand des diesbezüglichen Unteranspruchs.

Schließlich ist weiterer Gegenstand der vorliegenden Erfindung gemäß einem vierten Aspekt der vorliegenden Erfindung ein metallisches Substrat nach Anspruch 12; weitere vorteilhafte Ausgestaltungen dieses Erfindungsaspekt sind Gegenstand der diesbezüglichen Unteransprüche.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine wässrige Beschichtungszusammensetzung zur Herstellung einer Beschichtung, insbesondere eines Topcoats mit einstellbarer Reibzahl, wobei die Zusammensetzung enthält:
(a) ein organisches Bindemittel und ein anorganisches Bindemittel, wobei das organische Bindemittel ein organisches Polymer aufweist oder aus einem organischen Polymer besteht, und wobei das anorganische Bindemittel ausgewählt ist aus Silanen, Silanhydrolysaten, kolloidaler Kieselsäure, Silikaten und deren Mischungen,
(b) ein Schmiermittel ausgewählt aus der Gruppe von Wachsen, Kunststoffpartikeln, mikronisiertem Schwefel und deren Mischungen in Mengen von 2 bis 15 Gew.-%, bezogen auf die Beschichtungszusammensetzung, und
(c) plättchenförmige Partikel ausgewählt aus der Gruppe von Metallflakes, Graphen, Bornitrid, Glasflakes, Schichtsilikaten und deren Mischungen in Mengen von 4 bis 12 Gew.-%, bezogen auf die Beschichtungszusammensetzung, und
wobei die Beschichtungszusammensetzung frei ist von organischen fluorhaltigen Verbindungen .

Denn, wie die Anmelderin überraschenderweise herausgefunden hat, lassen sich auf Basis handelsüblicher organischer bzw. anorganischer Bindemittel wässrige Beschichtungszusammensetzungen für Topcoats mit gezielt einstellbaren Reibzahlen erhalten, wenn den Zusammensetzungen mindestens ein Schmiermittel in definierten Mengen und plättchenförmigen Partikel zugesetzt werden. Besonders gute Ergebnisse werden dabei erzielt, wenn Mischungen organischer und anorganischer Bindemittel eingesetzt werden. Die erfindungsgemäßen Zusammensetzungen sind insbesondere frei von fluorierten Polymeren, speziell PTFE.

Überraschenderweise zeigen die erfindungsgemäßen Beschichtungszusammensetzungen nach Aushärtung zum Topcoat vergleichbare Gleit- und Reibeigenschaften wie PTFE-haltige Topcoatzusammensetzungen, wobei jedoch die Streuung der gemessenen Reibzahlwerte von beschichteten Befestigungsmitteln, wie beispielsweise Schrauben, deutlich geringer ausfällt als bei den bislang im Stand der Technik verwendeten fluorierten, insbesondere PTFE-haltigen, Beschichtungszusammensetzungen.

Darüber hinaus zeigen die erfindungsgemäßen Topcoatsysteme auch bei hohen Temperaturen, insbesondere hohen Trocknungstemperaturen, gleichbleibende Reibzahlen. Dies ist überraschend, da schmiermittelhaltige Topcoats, insbesondere für den Fall, dass sie Wachse enthalten, nach Temperaturbelastung insbesondere eine höhere Reibzahl aufweisen. Dies ist insbesondere darauf zurückzuführen, dass die Schmiermittel, insbesondere Wachse, während des Trocknungsprozesses in die Gasphase übergehen oder thermisch zersetzt werden. Erstaunlicherweise zeigen Topcoats, die neben einem Schmiermittel plättchenförmige Partikel enthalten, diesen Anstieg der Reibzahl nicht. Dies ist - ohne sich auf eine Theorie festlegen zu wollen - wahrscheinlich darauf zurückzuführen, dass die plättchenförmigen Partikel als Diffusionsbarriere wirken und einerseits das Eindringen von Sauerstoff in die Beschichtung verzögern und so eine Zersetzung des Schmierstoffs verlangsamen und andererseits, bei Verwendung verdampfbarer bzw. sublimierter Schmierstoffe, den Schmierstoff daran hindern in die Gasphase überzugehen.

Die erfindungsgemäßen Beschichtungszusammensetzungen erlauben somit eine sehr viel genauere Einstellung der Reibzahl mit einer insbesondere deutlich geringeren Varianz als die bislang verwendeten PTFE-haltigen Topcoatzusammensetzungen. Besonders ausgeprägt ist dieser Effekt, wenn eine Mischungen aus organischen und anorganischen Bindemittel eingesetzt wird, insbesondere wenn als organisches Bindemittel ein acrylatbasiertes Bindemittel ist, d.h. auf Basis von Acryl bzw. Polyacrylat oder dessen Copolymeren ausgebildet ist, wobei Acrylat bevorzugt ist, und das anorganische Bindemittel ein siliciumhaltiges Bindemittel ist, wie nachfolgend noch dargelegt.

Die erfindungsgemäßen Beschichtungszusammensetzungen lassen sich problemlos in wässrigem Medium formulieren und können darüber hinaus frei von **PTFE** sein. Vorzugsweise sind sie sogar gänzlich frei von fluorierten Polymeren.

Die vorliegende Erfindung ermöglicht somit einen einfachen Zugang zu Topcoats, deren Reibzahlen auf für die industrielle Fertigung benötigten Werte eingestellt werden können, und dies in Systemen, welche sowohl lösemittelfrei als auch frei von fluorierten Polymeren, insbesondere frei von **PTFE,** sind. Die erfindungsgemäße Beschichtungszusammensetzung ist somit sowohl unter Umweltgesichtspunkten als auch unter Aspekten des Arbeitsschutzes den bislang bekannten üblicherweise fluorpolymerhaltigen und lösemittelbasierten Systemen überlegen. Darüber hinaus zeigen mit der erfindungsgemäßen Beschichtungszusammensetzung beschichtete Substrate, insbesondere Befestigungsmittel, wie beispielsweise Schrauben, Muttern, Bolzen etc., eine deutlich geringere Varianz der Reibzahl als die bislang verwendeten PTFE-haltigen Systeme.

Es hat sich dabei gezeigt, dass die Gleiteigenschaften deutlich verbessert werden und die Reibzahl, insbesondere auch bei erhöhten Temperaturen stabil eingestellt werden kann, wenn dem Bindemittel ein Schmiermittel und plättchenförmige Pigmente zugesetzt sind.

Unter einem Schmiermittel ist im Rahmen der vorliegenden Erfindung ein chemischer Stoff oder ein Stoffgemisch zu verstehen, welches die tribologischen Eigenschaften einer Beschichtung ändert, insbesondere die Reibung mindert. Schmiermittel können im Rahmen der vorliegenden Erfindung sowohl flüssig als auch als Feststoff vorliegen, wobei die Verwendung fester Schmiermittel bevorzugt ist.

Unter einem Wachs ist im Rahmen der vorliegenden Erfindung insbesondere ein natürlicher oder künstlich gewonnener Stoff zu verstehen, der üblicherweise bei 20 °C knetbar, fest bis brüchig hart, grob bis feinkristallin, durchscheinend bis opak, jedoch nicht glasartig ist und bei über 40 °C ohne Zersetzung schmilzt. Schon wenig oberhalb des Schmelzpunktes ist ein Wachs üblicherweise verhältnismäßig niedrig viskos und nicht fadenziehend. Wachse unterscheiden sich von ähnlichen synthetischen oder natürlichen Produkten hauptsächlich darin, dass sie in der Regel etwa zwischen 50 und 90 °C, in Ausnahmen auch bis zu etwa 200 °C, in den schmelzflüssigen, niedrig viskosen Zustand übergehen und praktisch frei von aschebildenden Verbindungen sind. Wachse bilden Pasten oder Gele und brennen in der Regel mit rußender Flamme. Nach Ihrer Herkunft teilt man Wachsen in drei Gruppen, nämlich natürliche Wachse, teilsynthetische Wachse und synthetische Wachse ein. Natürliche Wachse bestehen insbesondere aus pflanzlichen Wachsen, wie beispielsweise Candelillawachs, Carnaubawachs oder Montanwachs, tierischen Wachsen, wie beispielsweise Bienenwachs, Wollwachs und Bürzelfett, Mineralwachsen, wie Ceresin und Ozokerit, sowie petrochemischen Wachsen, insbesondere Petrolatum, Paraffinwachse und Mikrowachse. Teilsynthetische Wachse sind insbesondere Hartwachse, wie beispielsweise Montanesterwachse und hydrierte Jojobawachse. Synthetische Wachse sind beispielsweise Polyalkylenwachse oder Polyethylenglycolwachse.

Unter plättchenförmigen Partikeln, welche auch oftmals als schuppenförmige Partikel bezeichnet werden, sind im Rahmen der vorliegenden Erfindung Partikel zu verstehen, deren Dicke deutlich geringer ist als die Länge und Breite, d.h. deren Ausdehnung in eine Raumrichtung deutlich geringer ist als in die beiden anderen Raumrichtungen. Üblicherweise liegt das Aspektenverhältnis, d.h. das Verhältnis von Länge bzw. Breite der Partikel zur Dicke der Partikel im Bereich von 2 : 1 bis 100 : 1, insbesondere 4 : 1 bis 50 : 1, vorzugsweise 5 : 1 bis 20 : 1, bevorzugt 8 : 1 bis 15 : 1.

Wie zuvor bereits ausgeführt, ist es im Rahmen der industriellen Produktion, insbesondere der Verschraubung durch Roboter, unerlässlich, dass die Gleiteigenschaften bzw. die Reibzahlen von beschichteten Befestigungsmitteln, insbesondere Schrauben, reproduzierbar stets vergleichbare Werte annehmen.

Aus diesem Grund definiert die VDA-Richtlinie 235-101 ein sogenanntes Reibzahlfenster, in welchem die Reibzahl µ für Befestigungsmittel, insbesondere Bolzen, Muttern und Schrauben, liegen darf. Dieses Reibzahlfenster umfasst ein Intervall der Reibzahl µ von 0,09 bis 0,16. Die Reibzahl wird dabei gemäß DIN EN ISO 16047:2013-01 bestimmt. Sofern andere Reibzahlfenster definiert und gewünscht werden, lassen sich diese durch die hier beschriebene Erfindung ebenfalls erfüllen.

Im Rahmen der vorliegenden Erfindung wird es bevorzugt, wenn die mit der erfindungsgemäßen Beschichtungszusammensetzung beschichtete Oberfläche bzw. das beschichtete Substrat eine Reibzahl µ bestimmt nach DIN EN ISO 16047:2013-01 im Bereich von 0,09 bis 0,16 aufweist.

Im Fall von Schrauben wird die Reibzahl dabei sowohl am Gewinde als auch an einer ebenen Fläche, insbesondere dem Kopf der Schraube, bestimmt. Diese zweifache Bestimmung ist notwendig, da Werkstücke, insbesondere Gewindeteile, am Gewinde eine andere Reibzahl aufweisen als an ebenen beschichteten Flächen, wie zum Beispiel dem Kopf einer Schraube. So weisen Schrauben, die als Innenträger ausgestaltet sind, am Gewinde eine höhere Reibzahl und damit schlechtere Gleiteigenschaften auf als am Kopf der Schraube, der auf einer Mutter oder Gewindescheibe aufliegt. Liegt die Schraube als Außenträger vor, so ist die Reibzahl am Kopf höher als am Gewinde.

Da die Reibzahlmessung für beide Bereiche (Gewinde und ebene Fläche) in die Reibzahlbestimmung für das gesamte Werkstück eingehen, weisen Werkstücke, die mit einer Beschichtung ohne Schmiermittel beschichtet sind, oftmals eine unerwünscht hohe Reibzahl auf, so dass beispielsweise zusätzlich Gleitmittel bei Fügeprozessen eingesetzt werden müssen. Erfindungsgemäß kann hingegen auf die Verwendung von Gleitmitteln verzichtet werden.

Im Rahmen der vorliegenden Erfindung ist es vorzugsweise vorgesehen, dass für Gewindeteile, wie beispielsweise Schrauben, die Reibzahl sowohl für das Gewinde als auch die ebene Fläche jeweils im vorgenannten Reibzahlfenster der Reibzahl µ von 0,09 bis 0,16 liegen.

Da die in der DIN EN ISO 16047:2013-01 genannte Prüfverordnung für einen einmaligen Anzug gilt, wird ergänzend im Prüfblatt gemäß VDA 235-203 eine Prüfanordnung für einen Mehrfachanzug festgelegt.

Im Rahmen der vorliegenden Erfindung ist es vorzugsweise weiterhin vorgesehen, dass auch bei einem Mehrfachanzug das oben genannte Reibzahlfenster für die Reibzahl µ von 0,09 bis 0,16 erfüllt ist, und zwar sowohl am Gewinde als auch an ebenen Flächen.

Darüber hinaus ist auch das Warmlöseverhalten von Werkstücken, insbesondere von Befestigungsmitteln, wie Schrauben oder Bolzen, kritisch, insbesondere wenn diese im Bereich von Aggregaten, wie beispielsweise Motoren, verbaut sind. Aus diesem Grund definiert das VDA Prüfblatt 235-203 eine Prüfanordnung bei Temperaturbelastung bei 150°C, wobei eine Reibzahl µ von 0,06 nicht unterschritten werden darf.

Im Rahmen der vorliegenden Erfindung wird es daher bevorzugt, wenn die mit der erfindungsgemäßen Beschichtungszusammensetzung beschichteten Werkstücke bei 150 °C gemäß VDA-Prüfblatt 235-203 eine Reibzahl µ von nicht unter 0,06, aufweisen. Dieses Reibzahlfenster ist vorzugsweise sowohl für die Gesamtreibzahl als auch, bei Werkstücken mit Gewinde, am Gewinde und an der ebenen Fläche erfüllt.

Wie zuvor dargelegt, enthält die erfindungsgemäße Beschichtungszusammensetzung ein Bindemittel. Die Menge, in welchen die Beschichtungszusammensetzung das Bindemittel enthält, kann in Abhängigkeit der genauen Anforderungen und jeweiligen geplanten Einsatzzweck in weiten Bereichen variieren. Üblicherweise enthält die Beschichtungszusammensetzung das Bindemittel jedoch in Mengen von 6 bis 40 Gew.-%, insbesondere 9 bis 33 Gew.-%, vorzugsweise 11 bis 27 Gew.-%, bevorzugt 13 bis 22 Gew.-%, bezogen auf die Beschichtungszusammensetzung.

Im Rahmen der vorliegenden Erfindung ist es vorgesehen, dass die Beschichtungszusammensetzung ein organisches Bindemittel und ein anorganisches Bindemittel enthält. Bevorzugt wird es im Rahmen der vorliegenden Erfindung somit, wenn die Beschichtungszusammensetzung eine Mischung aus organischen und anorganischen Bindemitteln enthält.

Wenn die Beschichtungszusammensetzung organische und anorganische Bindemittel enthält, so kann die Beschichtungszusammensetzung das organische Bindemittel in nahezu beliebigen Mengen enthalten. Es hat sich jedoch bewährt, wenn die Beschichtungszusammensetzung das organische Bindemittel in Mengen von 2 bis 20 Gew.-%, insbesondere 3 bis 15 Gew.-%, vorzugsweise 4 bis 12 Gew.-%, bevorzugt 5 bis 10 Gew.-%, bezogen auf die Beschichtungszusammensetzung, enthält.

Die Beschichtungszusammensetzung enthält vorzugsweise neben dem organischen Bindemittel ein anorganisches Bindemittel. Durch den Zusatz eines anorganischen Bindemittels wird insbesondere die Verschleißbeständigkeit und mechanische Widerstandsfähigkeit der Beschichtung erhöht. Darüber hinaus ist der Einsatz anorganischer Beschichtungen auch kommerziell wünschenswert, da diese oftmals kostengünstig in großindustriellem Maßstab herzustellen bzw. zu beziehen sind.

Wenn die Beschichtungszusammensetzung organische und anorganische Bindemittel enthält, so hat es sich bewährt, wenn die Beschichtungszusammensetzung das anorganische Bindemittel in Mengen von 4 bis 20 Gew.-%, insbesondere 6 bis 18 Gew.-%, vorzugsweise 7 bis 15 Gew.-%, bevorzugt 8 bis 13 Gew.-%, bezogen auf die Beschichtungszusammensetzung, enthält.

Was nun das organische Bindemittel anbelangt, so kann dieses aus einer Vielzahl geeigneter Bindemittel ausgewählt werden.

Erfindungsgemäß weist das organische Bindemittel ein organisches Polymer auf oder besteht aus einem organischem Polymer. Bevorzugt besteht das organische Bindemittel aus einem organischen Polymer.

Das organische Polymer kann dabei ausgewählt sein aus der Gruppe von Acrylaten, Polyurethanen, Polyvinylacetat und deren Mischungen und Copolymeren. Vorzugsweise ist das Polymer ausgewählt aus der Gruppe von Acrylaten, Polyurethanen und deren Mischungen und Copolymeren, insbesondere von Acrylaten und Acrtylatcopolymeren. Besonders gute Ergebnisse werden im Rahmen der vorliegenden Erfindung erhalten, wenn das Polymer ein Acrylat ist.

Im Rahmen der vorliegenden Erfindung werden somit vorzugsweise organische Bindemittel auf Acrylatbasis eingesetzt, insbesondere Reinacrylate, welche oftmals auch als Polyacrylate oder Acryl bezeichnet werden. Bei Acrylaten bzw. Polyacrylaten oder Acryl handelt es sich um Polymere der Acrylsäure oder Methacrylsäure bzw. von deren Estern. Acrylatbindemittel lassen sich insbesondere problemlos in wässrigen Medien formulieren und weisen hervorragende Filmbildungseigenschaften auf.

Im Rahmen der vorliegenden Erfindung hat es sich daher bewährt, wenn das Polymer erhältlich ist aus Monomeren ausgewählt aus der Gruppe von Acrylsäure, Estern der Acrylsäure mit C₁- bis C₁₀-Alkoholen, Methacrylsäure, Estern der Methacrylsäure mit C₁- bis C₁₀-Alkoholen, Fumarsäure, Maleinsäure und deren Mischungen. Besonders gute Ergebnisse werden in diesem Zusammenhang erhalten, wenn das Polymer erhältlich ist aus Monomeren ausgewählt aus der Gruppe von Acrylsäure, Ethern der Acrylsäure mit C₁- bis C₁₀-Alkoholen, Methacrylsäure und Estern der Methacrylsäure mit C₁- bis C₁₀-Alkoholen und deren Mischungen.

Noch weiter bevorzugt wird es im Rahmen der vorliegenden Erfindung, wenn das Polymer erhältlich ist aus Monomeren ausgewählt aus der Gruppe von Acrylsäure, Acrylsäuremethylester, Acrylsäureethylester, Acrylsäurebutylester, Acrylsäureisobutylester, Acrylsäure-2-ethylhexylester, Methacrylsäure, Methacrylsäuremethylester, Methacrylsäureethylester, Methacrylsäurebutylester, Methacrylsäureisobutylester und Methacrylsäurehexylester. In diesem Zusammenhang hat es sich besonders bewährt, wenn das Polymer erhältlich ist aus Monomeren ausgewählt ist aus der Gruppe von Acrylsäure, Acrylsäuremethylester, Acrylsäureethylester, Methacrylsäure, Methacrylsäuremethylester, Methacrylsäureethylester und deren Mischungen, vorzugsweise Acrylsäure, Methacrylsäure und deren Mischungen.

Was nun das Molekulargewicht des Polymers anbelangt, so kann dieses naturgemäß gleichermaßen in weiten Bereichen variieren. Es hat sich jedoch bewährt, wenn das Polymer ein gewichtsmittleres Molekulargewicht M_{w} im Bereich von 2.000 bis 250.000 g/mol, insbesondere 5.000 bis 200.000 g/mol, vorzugsweise 10.000 bis 150.000 g/mol, bevorzugt 15.000 bis 100.000 g/mol, aufweist

Die im Rahmen dieser Erfindung angegebenen Molekulargewichte für polymere Verbindungen beziehen sich auf das gewichtsmittlere Molekulargewicht M_{w}, bei welchem die Masse der einzelnen polymeren Verbindungen mit ihrem Gewichtsanteil gewichtet wird. Die Molekulargewichte bzw. die Molekulargewichtsverteilung können durch verschiedene, standardisierte Verfahren und Methoden bestimmt werden, wie beispielsweise durch Lichtstreuung, Rheologie, Massenspektrometrie, Permeations-Chromatographie etc. Die zur Bestimmung der Molekulargewichtsverteilung verwendeten Verfahren sind dem Fachmann jedoch geläufig und bedürfen keiner näheren Erläuterung. So können die Molekulargewichte der eingesetzten Polymere insbesondere anhand einer GPC-Methode bestimmt werden, insbesondere auf Basis der DIN 55672 mit Polymethylmethacrylat bzw. Polystyrol als Standard.

Das anorganische Bindemittel ist ein siliciumhaltiges Bindemittel.

Erfindungsgemäß ist das anorganische Bindemittel ausgewählt ist aus der Gruppe von Silanen, insbesondere Trialkoxysilanen und Tetraalkoxysilanen, vorzugsweise Vinylsilanen, Aminsilanen, Phenoxysilanen und/oder Epoxysilanen, Tetraethylorthosilikat (TEOS), Tetramethylorthosilikat (TMOS), Silanhydrolysaten, kolloidaler Kieselsäure, Wassergläsern bzw. Silikaten, insbesondere Lithiumwasserglas, Natriumwasserglas, Kaliumwasserglas und deren Mischungen. Insbesondere können vorzugsweise als Silane die Silane verwendet werden, die nachfolgend bei der Herstellung silanmodifizierter Silikate genannt sind.

Gemäß einer bevorzugten Ausführungsform der vorliegenden Erfindung ist das anorganische Bindemittel insbesondere frei von Lithiumverbindungen. Im Rahmen der vorliegenden Erfindung können besonders gute Beschichtungs- und Gleiteigenschaften auch dann erhalten werden, wenn auf das üblicherweise bevorzugt eingesetzte Lithiumpolysilikat (Lithiumwasserglas) verzichtet wird. Dies ist ein besonderer Vorteil der vorliegenden Erfindung, da der Lithiumbedarf und in der Folge voraussichtlich auch die Lithiumpreise aufgrund der zunehmenden Verbreitung von Lithiumionenbatterien und Lithiumionenakkumulatoren, insbesondere im Automobilbereich, steigen werden.

Vorzugsweise ist das anorganische Bindemittel ausgewählt aus der Gruppe von Silanen, insbesondere Trialkoxysilanen und Tetraalkoxysilanen, vorzugsweise Vinylsilanen, Aminsilanen, Phenoxysilanen und/oder Epoxysilanen, Tetraethylorthosilikat (TEOS), Tetramethylorthosilikat (TMOS), Silanhydrolysaten, kolloidaler Kieselsäure (Kieselsol), Natriumwasserglas, Kaliumwasserglas und deren Mischungen. Besonders bevorzugt ist das anorganische Bindemittel ausgewählt aus der Gruppe von Natriumwasserglas, Kaliumwasserglas und deren Mischungen.

Gemäß einer bevorzugten Ausführungsform der vorliegenden Erfindung weist das anorganische Bindemittel eine Mischung von Wasserglas und/oder kolloidaler Kieselsäure mit Silanhydrolysat und/oder Silan auf oder besteht aus dieser. Vorzugsweise besteht das anorganische Bindemittel aus einer Mischung von Wasserglas und/oder kolloidaler Kieselsäure mit Silanhydrolysat und/oder Silan. Auch diese Mischungen zeigen bei alkalischen pH-Werten keine Carbonatisierung.

Gemäß dieser Ausführungsform wird es bevorzugt, wenn das organische Bindemittel das Wasserglas und/oder die kolloidale Kieselsäure in einem gewichtsbezogenen Verhältnis zum Silanhydrolysat und/oder Silan im Bereich von 15 : 1 bis 1 : 2, insbesondere 1 : 1 bis 1 : 1,5, vorzugsweise 5 : 1 bis 1 : 1, bevorzugt 4 : 1 bis 1 : 1, enthält.

Gleichermaßen hat es sich gemäß dieser Ausführungsform bewährt, wenn das anorganische Bindemittel, insbesondere vor Mischung mit dem organischen Bindemittel, auf einen pH-Wert kleiner 11, insbesondere kleiner 9, bevorzugt kleiner 8,5, eingestellt wird. Vorzugsweise wird anorganische Bindemittel, insbesondere vor Mischung mit dem organischen Bindemittel, auf einen pH-Wert kleiner 8, insbesondere im Bereich von pH 5 bis pH 7,5 eingestellt wird.

Bei Mischungen von Wassergläsern und/oder kolloidalen Kieselsäuren mit Silanhydrolysaten und/oder Silanen wird insbesondere eine deutlich schwächere oder ausbleibende Carbonatisierung, d. h. die Aufnahme von Kohlenstoffdioxid aus der Luft mit anschließender Bildung von Carbonaten, insbesondere bei pH-Werten im alkalischen Bereich, beobachtet. Die Carbonatisierung führt insbesondere bei Topcoats zu einer ungewünschten Beeinträchtigung der Oberflächeneigenschaften, insbesondere der Optik, durch eine Trübung des Topcoats. Die Beschichtungen erscheinen dann oftmals staubig, was nicht gewünscht ist. Ein weiterer Vorteil der beschriebenen Mischungen ist, dass der pH-Wert des anorganischen Bindemittels und/oder der Beschichtungszusammensetzung im sauren Bereich eingestellt werden kann, ohne dass das Silikat bzw. die Kieselsäure ausfällt.

Besonders gute Ergebnisse werden in diesem Zusammenhang erhalten, wenn das anorganische Bindemittel eine silanmodifizierte Silikatverbindung bzw. ein silanmodifiziertes Wasserglas ist. Die silanmodifizierte Silikatverbindung bzw. das silanmodifizierte Wasserglas wird üblicherweise durch ein mindestens teilweises Hydrolysieren und/oder Kondensieren mindestens eines Silans in Gegenwart mindestens eines Silikats bei einem pH-Wert gleich oder größer 8 erhalten.

Bei der Verwendung silanmodifizierter Silikatverbindungen bzw. silanmodifizierter Wassergläser wird gleichfalls keine Carbonatisierung beobachtet und der pH-Wert des anorganischen Bindemittels oder der Beschichtungszusammensetzung kann auf Werte kleiner oder gleich 7 eingestellt werden, ohne dass das Silikat ausfällt. Die pH-Werteinstellung kann dabei durch Zugeben von Säuren erfolgen. Eine Verwendung der silanmodifizierten Silikatverbindungen bzw. der silanmodifizierten Wassergläser im neutralen oder sauren pH-Bereich ist bevorzugt, insbesondere da im sauren Bereich die Absorption von Kohlenstoffdioxid in Form von Carbonaten deutlich reduziert ist.

Vorzugsweise wird das Verfahren zum Herstellen eines silanmodifizierten Silikats bzw. eines silanmodifizierten Wasserglases derart durchgeführt, dass eine Silan in Gegenwart einer Silikatverbindung bzw. eines Wasserglases bei einem pH-Wert gleich oder größer 8, insbesondere größer 11, mindestens teilweise hydrolysiert wird zu einem silanmodifizierten Silikat bzw. Wasserglas und anschließend der pH-Wert auf Werte kleiner 8,5, insbesondere kleiner 8, vorzugsweise im Bereich von 4 bis 7, eingestellt wird, insbesondere durch Zugabe von Säure.

Es ist auch möglich, beim Ansäuern einen pH-Wert zwischen 2 und 4 einzustellen, der erreicht und gehalten werden kann, ohne dass es zum Ausfällen oder Ausflocken der silanmodifizierten Silikatverbindung bzw. des silanmodifizierten Wasserglases kommt.

Eine vorteilhafte Wirkung zeigt sich bereits, wenn nur eine teilweise Hydrolyse bzw. Kondensation von Silan in Gegenwart von Silikaten in wässriger Lösung im Alkalischen erfolgt. Häufig wird die Hydrolyse bzw. Kondensation von Silan in Gegenwart von Silikaten zu einer silanmodifizierten Silikatverbindung bzw. einem silanmodifizierten Wasserglas jedoch vollständig im Alkalischen durchgeführt. Eine teilweise Hydrolyse von Silan und Silikat in wässriger alkalischer Lösung kann nach dem Ansäuern auf einen pH-Wert von 7 oder kleiner fortgesetzt werden, falls gewünscht bis hin zur vollständigen Hydrolyse.

Als Wasserglas bzw. Silikat werden auch gemäß dieser Ausführungsform insbesondere die zuvor genannten Verbindungen Lithiumwasserglas, Natriumwasserglas, Kaliumwasserglas und deren Mischungen eingesetzt, vorzugsweise Natriumwasserglas, Kaliumwasserglas und deren Mischungen.

Zur Herstellung von silanmodifizierten Silikatverbindungen bzw. Wassergläser wird vorteilhaft ein epoxyfunktionelles, phenoxyfunktionelles, vinylfunktionelles oder aminofunktionelles Silan eingesetzt. Besonders bevorzugt wird der Einsatz von Silanen, die mindestens eine Si-C-Bindung, also eine Bindung zwischen einem Silizium- und einem Kohlenstoffatom aufweisen. Verschiedene Silane können miteinander in Mischung eingesetzt werden. Besonders geeignete Silane sind Methacryloxymethyltrimethoxysilan, Methacryloxymethyltriethoxysilan, 3-aminopropylmethyldimethoxy silan, 3-aminopropyltriethoxysilan, N-(2-aminoethyl)-3-aminopropylmethyldimethoxy silan sowie 3-Mercaptopropyltrimethoxysilan, N-(2-Aminoethyl)-3-aminopropyltrimethoxysilan, N-(2-Aminoethyl)-3-aminopropyl-trimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)-propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)methyldimethoxysilan, Methacryloxymethyltrimethoxysilan, 3-Methacryloxypropyltriacetoxysilan, N-Methyl[3-(Trimethoxysilyl)propyl]carbamat, N-Trimethoxysilylmethyl-O-methylcarbamat, N-Dimethoxy(methyl)silylmethyl-O-methylcarbamat, Tris-[3-(trimethoxysilyl)propyl]-isocyanurat, 3-Glycidoxypropyltrimethoxysilan , 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan, 1,2-Bis(triethoxysilyl)ethan.

Bei der Herstellung der silanmodifizierten Silikate werden Silan und Silikat jeweils vorteilhaft in einem Gewichtsverhältnis von 2 : 1 bis 1 : 10, insbesondere 1 : 1 bis 1 : 5, vorzugsweise 1 : 1 bis 1 : 3, bevorzugt 1 : 1 bis 1 : 2, eingesetzt. Dabei kann das Silan als einzelne Verbindung oder als Mischung von Silanen eingesetzt werden, gleiches gilt für das Silikat. Für weitergehende Einzelheiten zur Herstellung silanmodifizierter Silikate bzw. Wassergläser kann auf die WO 2016/107791 A1 verwiesen werden, deren diesbezüglicher Offenbarungsgehalt vollumfänglich von der vorliegenden Erfindung mitumfasst ist.

Falls im Rahmen der vorliegenden Erfindung eine Mischung aus organischen und anorganischen Bindemittel eingesetzt wird, werden besonders gute Ergebnisse erhalten, wenn das anorganische und das organische Bindemittel in einem spezifischen Gewichtsverhältnis zueinander eingesetzt werden. Besonders gute Ergebnisse werden im Rahmen der vorliegenden Erfindung erhalten, wenn das gewichtsbezogene Verhältnis von anorganischem Bindemittel zu organischem Bindemittel im Bereich von 1 : 1,2 bis 3: 1 insbesondere 1:1 bis 2 : 1, vorzugweise 1,1 : 1 bis 1,8 : 1, bevorzugt 1,1 : 1 bis 1,4 : 1 bezogen auf das Gewicht an anorganischem Bindemittel und das Gewicht an organischem Bindemittel in der Beschichtungszusammensetzung, variiert. Im Rahmen der vorliegenden Erfindung ist es somit bevorzugt, wenn ein gewisser Überschuss an anorganischem Bindemittel eingesetzt wird.

Wie zuvor ausgeführt, enthält die Beschichtungszusammensetzung ein Schmiermittel. Das Schmiermittel ist dabei ausgewählt aus der Gruppe von organischen Schmiermitteln, anorganischen Schmiermitteln und deren Mischungen. Besonders gute Ergebnisse werden im Rahmen der vorliegenden Erfindung jedoch erhalten, wenn das Schmiermittel ein organisches Schmiermittel ist.

Die im Rahmen der vorliegenden Erfindung verwendeten Schmiermittel liegen üblicherweise in partikulärer Form vor. Die Schmiermittel weisen dabei üblicherweise absolute Partikelgrößen im Mikrometerbereich auf.

Im Rahmen der vorliegenden Erfindung werden besonders gute Ergebnisse erhalten, da das Schmiermittel ausgewählt ist aus der Gruppe von Wachsen, Kunststoffpartikeln, insbesondere aus Polyetherketon (PEK), Polyetheretherketon (PEEK), Polyphenylensulfid (PPS), Polyethersulfon (PES), Polyetherimid (PEI), Polyamidimid (PAI) und deren Mischungen, mikronisiertem Schwefel und deren Mischungen. Besonders gute Ergebnisse werden im Rahmen der vorliegenden Erfindung erhalten, wenn das Schmiermittel ein Wachs ist.

Wenn es sich bei dem Schmiermittel um ein Wachs handelt, so hat es sich bewährt, wenn das Wachs ausgewählt ist aus der Gruppe von natürlichen Wachsen, teilsynthetischen Wachsen, synthetischen Wachsen und deren Mischungen. Vorzugsweise handelt es sich bei dem Wachs um ein synthetisches Wachs.

Gleichermaßen wird es im Rahmen der vorliegenden Erfindung bevorzugt, wenn das Wachs ausgewählt ist aus der Gruppe von Bienenwachs, Carnaubawachs, Montanwachs, modifiziertem Montanwachs, Amidwachs, Polypropylenwachs, Polyethylenwachs, HDPE-Wachs (High-Density-Polyethylene-Wachs), oxidiertem HDPE-Wachs, Ethylen-Vinylacetatwachs, Polyethylenglycolwachs, Polyesterwachs, Fischer-Tropsch-Wachs und deren Mischungen, vorzugsweise Polypropylenwachs, Polyethylenwachs, HDPE-Wachs, oxidiertem HDPE-Wachs, Ethylen-Vinylacetatwachs, Polyethylenglycolwachs, Polyesterwachs, Fischer-Tropsch-Wachs und deren Mischungen.

Besonders gute Ergebnisse werden in diesem Zusammenhang erhalten, wenn das Wachs ausgewählt ist aus der Gruppe von Polypropylenwachs, Polyethylenwachs, HDPE-Wachs, oxidiertem HDPE-Wachs, Fischer-Tropsch-Wachs und deren Mischungen.

Ganz besonders bevorzugt ist im Rahmen der vorliegenden Erfindung, wenn das Wachs ein Polyethylenwachs (PE-Wachs) ist.

Mit Wachsen, insbesondere synthetischen Wachsen, vorzugsweise PolyethylenWachs, als Schmiermittel, lassen sich speziell die Gleit- und Reibungseigenschaften der Beschichtungszusammensetzung hervorragend einstellen. Insbesondere zeigen gerade Kombinationen von einem organischen Bindemittel, einem anorganischen Bindemittel, einem Schmiermittel auf Wachsbasis und plättchenförmigen Pigmenten hervorragende und beständige Reibzahlen, insbesondere auch bei Mehrfachanzug und unter Wärmebelastung.

Weiterhin ist es im Rahmen der Erfindung vorgesehen, dass die Beschichtungszusammensetzung das Schmiermittel in Mengen von 2 bis 15 Gew.-%, vorzugsweise 3 bis 12 Gew.-%, bevorzugt 4 bis 10 Gew.-%, besonders bevorzugt 4,5 bis 8 Gew.-%, bezogen auf die Beschichtungszusammensetzung, enthält.

Im Rahmen der vorliegenden Erfindung ist es vorgesehen, dass die Beschichtungszusammensetzung frei ist von organischen fluorhaltigen Verbindungen. Ganz besonders bevorzugt ist es im Rahmen der vorliegenden Erfindung vorgesehen, dass die Beschichtungszusammensetzung frei ist von fluorierten Polymerpartikeln, insbesondere frei ist von PTFE und PVDF.

Es ist ein großer Vorteil der vorliegenden Erfindung, dass Beschichtungszusammensetzungen mit gezielt einstellbarer Reibzahl bereitgestellt werden können, welche ohne den Einsatz bedenklicher fluorierter Polymerpartikel auskommen. Insbesondere ist es im Rahmen der vorliegenden Erfindung möglich, Beschichtungszusammensetzungen mit hervorragenden Gleit- und Reibeigenschaften bereitzustellen, welche vollkommen ohne den Einsatz von fluorierten organischen Verbindungen auskommen. Darüber hinaus gelingt es im Rahmen der vorliegenden Erfindung die Varianz der Reibzahl, d.h. die Streuung der gemessenen Reibzahlwerte für eine Beschichtungszusammensetzung im Vergleich zu Beschichtungszusammensetzungen mit fluorierten Polymerpartikeln deutlich zu verringern.

Darüber hinaus ist es im Rahmen der vorliegenden Erfindung vorgesehen, dass die Beschichtungszusammensetzung plättchenförmige Partikel enthält. Es hat sich bewährt, dass die plättchenförmigen Partikel ausgewählt sind aus der Gruppe von Metallflakes, Graphen, Bornitrid, Glasflakes, Schichtsilikaten und deren Mischungen. Die Schichtsilikate sind dabei vorzugsweise ausgewählt aus der Gruppe von Glimmer, Talkum, Bentonit, Kaolin und deren Mischungen. Die Metallflakes sind in diesem Zusammenhang vorzugsweise ausgewählt aus der Gruppe von Aluminiumflakes, Zinkflakes, Kupferflakes und deren Mischungen.

Bevorzugt sind die plättchenförmigen Partikel Metallflakes, insbesondere ausgewählt aus der Gruppe von Aluminiumflakes, Zinkflakes, Kupferflakes und deren Mischungen. Besonders bevorzugt ist es, wenn die plättchenförmigen Partikel Aluminiumflakes sind.

Es weist die Beschichtungszusammensetzung die plättchenförmigen Partikel in Mengen von 4 bis 12 Gew.-%, vorzugsweise 4 bis 10 Gew.-%, bevorzugt 5 bis 8 Gew.-%, bezogen auf die Beschichtungszusammensetzung, auf.

Durch den Einsatz von plättchenförmigen Partikeln in der Beschichtungszusammensetzung können die Reibzahlen und die Gleiteigenschaften der beschichteten Substrate genau eingestellt werden und insbesondere der Stick-Slip-Effekt noch besser vermieden werden. Darüber hinaus ist es auch möglich, die Beschichtungszusammensetzung bei hohen Temperaturen auszuhärten, ohne dass ein Anstieg der Reibzahl beobachtet wird.

Besonders gute Ergebnisse werden erhalten, wenn das gewichtsbezogene Verhältnis von plättchenförmigen Partikeln zu Schmiermittel im Bereich von 0,8 : 1 bis 1,8 : 1, insbesondere 1 : 1 bis 1,6 : 1, vorzugweise 1,1 : 1 bis 1,4 : 1, bezogen auf das Gewicht an plättchenförmigen Partikeln und das Gewicht an Schmiermittel in der Beschichtungszusammensetzung variiert.

Weiterhin werden sehr gute Ergebnisse erhalten, wenn spezielle Verhältnisse von plättchenförmigen Partikeln zu Bindemittel vorliegen. So hat es sich bewährt, wenn gewichtsbezogene Verhältnis von plättchenförmigen Partikeln zu Bindemittel im Bereich von 1 : 2 bis 1 : 17, insbesondere 1 : 2,4 bis 1 : 9, vorzugweise 1 : 2,5 bis 1: 4, bevorzugt 1 : 2,7 bis 1 : 3,2, bezogen auf das Gewicht an plättchenförmigen Partikeln und das Gewicht an Bindemittel in der Beschichtungszusammensetzung liegt.

**Im** Rahmen der vorliegenden Erfindung kann es weiterhin vorgesehen sein, dass die Beschichtungszusammensetzung mindestens einen Verdicker und/oder ein Rheologieadditiv aufweist.

Verdicker bzw. Rheologieadditive dienen insbesondere der Einstellung der Viskosität sowie des Verlaufs oder auch der Schichtdicke, mit welcher die erfindungsgemäße Zusammensetzung auf ein Substrat aufgebracht werden kann.

Wenn die Beschichtungszusammensetzung einen Verdicker und/oder ein Rheologieadditiv enthält, so enthält die Beschichtungszusammensetzung den Verdicker und/oder das Rheologieadditiv üblicherweise in Mengen von 0,01 bis 5 Gew.-%, insbesondere 0,05 bis 3 Gew.-%, vorzugsweise 0,1 bis 2 Gew.-%, bezogen auf die Beschichtungszusammensetzung.

Der Verdicker und/oder das Rheologieadditiv kann dabei aus einer Vielzahl geeigneter Verbindungen und Verbindungsklassen ausgewählt werden. Es hat sich jedoch bewährt, wenn der Verdicker und/oder das Rheologieadditiv ausgewählt ist aus der Gruppe von Ethylcellulose, Kieselsäure, Silikaten und deren Mischungen. Besonders bevorzugt ist der Verdicker und/oder das Rheologieadditiv Kieselsäure, insbesondere pyrogene Kieselsäure.

Gemäß einer weiteren bevorzugten Ausführungsform der vorliegenden Erfindung enthält die Beschichtungszusammensetzung
(a) ein Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes, und
(d) einen Verdicker und/oder ein Rheologieadditiv.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Darüber hinaus kann es vorgesehen sein, dass die Beschichtungszusammensetzung mindestens ein weiteres Additiv aufweist.

Falls die Beschichtungszusammensetzung ein weiteres Additiv aufweist, so enthält die Beschichtungszusammensetzung das weitere Additiv in Mengen von 0,01 bis 5 Gew.-%, insbesondere 0,05 bis 3 Gew.-%, vorzugsweise 0,1 bis 2 Gew.-%, bezogen auf die Beschichtungszusammensetzung.

Besonders gute Ergebnisse werden in diesem Zusammenhang erhalten, wenn das weitere Additiv ausgewählt ist aus der Gruppe von Netzmitteln, Konservierungsmitteln, Stabilisatoren, Säuren und/oder Basen, entschäumenden Komponenten, Filmbildnern, Verlaufsmitteln, UV-Absorbern, Füllstoffen, pH-Stabilisatoren und pH-Einstellmitteln.

Gemäß einer bevorzugten Ausführungsform der vorliegenden Erfindung ist es somit vorgesehen, dass die Beschichtungszusammensetzung
(a) ein Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes,
(d) einen Verdicker und/oder ein Rheologieadditiv und
(e) ein weiteres Additiv
aufweist.

Für diese besondere und bevorzugte Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Weiterhin kann es vorgesehen sein, dass die Beschichtungszusammensetzung einen Füllstoff enthält.

Wenn die Beschichtungszusammensetzung einen Füllstoff enthält, so enthält die Beschichtungszusammensetzung den Füllstoff üblicherweise in Mengen von 1,3 bis 50 Gew.-%, insbesondere 1 bis 40 Gew.-%, vorzugsweise 5 bis 35 Gew.-%, bevorzugt 10 bis 30 Gew.-%, bezogen auf die Beschichtungszusammensetzung.

Besonders gute Ergebnisse werden erhalten, wenn der Füllstoff ausgewählt ist aus Calciumcarbonat, Bariumsulfat, Talkum und deren Mischungen.

Gemäß einer weiteren Ausführungsform der vorliegenden Erfindung ist es somit vorgesehen, dass die Beschichtungszusammensetzung
(a) ein Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes,
(c) einen Verdicker und/oder ein Rheologieadditiv,
(d) ein weiteres Additiv und
(e) einen Füllstoff
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Wie zuvor dargelegt, werden im Rahmen der vorliegenden Erfindung beste Ergebnisse erhalten, wenn die Beschichtungszusammensetzung ein organisches Bindemittel und ein anorganisches Bindemittel enthält. Besonders gute Ergebnisse werden im Rahmen der vorliegenden Erfindung somit erhalten, wenn die Beschichtungszusammensetzung
(a1) ein organisches Bindemittel,
(a2) ein anorganisches Bindemittel
(b) ein Schmiermittel in Mengen von 2 bis 15 Gew.-%, bezogen auf die Beschichtungszusammensetzung, und
(c) plättchenförmige Partikel
enthält.

Die Beschichtungszusammensetzung kann das organische Bindemittel in nahezu beliebigen Mengen enthalten. Es hat sich jedoch bewährt, wenn die Beschichtungszusammensetzung das organische Bindemittel in Mengen von 2 bis 20 Gew.-%, insbesondere 3 bis 15 Gew.-%, vorzugsweise 4 bis 12 Gew.-%, bevorzugt 5 bis 10 Gew.-%, bezogen auf die Beschichtungszusammensetzung, enthält.

Weiterhin hat es sich bewährt, wenn die Beschichtungszusammensetzung das anorganische Bindemittel in Mengen von 4 bis 20 Gew.-%, insbesondere 6 bis 18 Gew.-%, vorzugsweise 7 bis 15 Gew.-%, bevorzugt 8 bis 13 Gew.-%, bezogen auf die Beschichtungszusammensetzung, enthält.

Durch die Verwendung eines anorganischen Bindemittels wird insbesondere die Verschleißbeständigkeit und mechanische Widerstandsfähigkeit der Beschichtung erhöht. Darüber hinaus ist der Einsatz anorganischer Beschichtungen auch kommerziell wünschenswert, da diese oftmals kostengünstig in großindustriellem Maßstab herzustellen bzw. zu beziehen sind. Wenn die Beschichtungszusammensetzung ein anorganisches Bindemittel enthält, so handelt es sich bei dem anorganischen Bindemittel üblicherweise um ein siliciumhaltiges Bindemittel.

Weiterhin hat es sich bewährt, wenn das gewichtsbezogene Verhältnis von plättchenförmigen Partikeln zu organischem Bindemittel im Bereich von 1 : 0,8 bis 1 : 5, insbesondere 1 : 1 bis 1 : 3, vorzugweise 1 : 1 bis 1: 2, bevorzugt 1 : 1,1 bis 1 : 1,4, bezogen auf das Gewicht an plättchenförmigen Partikeln und das Gewicht an organischem Bindemittel in der Beschichtungszusammensetzung liegt.

Gleichermaßen hat es sich bewährt, wenn das gewichtsbezogene Verhältnis von plättchenförmigen Partikeln zu anorganischem Bindemittel im Bereich von 1 : 1,2 bis 1 : 12, insbesondere 1 : 1,4 bis 1 : 6, vorzugweise 1 : 1,5 bis 1: 2, bevorzugt 1 : 1,6 bis 1 : 1,8 bezogen auf das Gewicht an plättchenförmigen Partikeln und das Gewicht an anorganischem Bindemittel in der Beschichtungszusammensetzung liegt.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Gemäß einer weiteren bevorzugten Ausführungsform der vorliegenden Erfindung enthält die Beschichtungszusammensetzung
(a1) ein organisches Bindemittel, insbesondere wobei das organische Bindemittel ein Polymer ausgewählt aus der Gruppe von Acrylaten und Acrylatcoplymeren aufweist,
(a2) ein anorganisches Bindemittel, insbesondere ein siliciumhaltiges Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes, und
(d) einen Verdicker und/oder ein Rheologieadditiv.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Gemäß einer bevorzugten Ausführungsform der vorliegenden Erfindung ist es vorgesehen, dass die Beschichtungszusammensetzung
(a1) ein organisches Bindemittel, insbesondere wobei das organische Bindemittel ein Polymer ausgewählt aus der Gruppe von Acrylaten und Acrylatcoplymeren aufweist,
(a2) ein anorganisches Bindemittel, insbesondere ein siliciumhaltiges Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes,
(d) einen Verdicker und/oder ein Rheologieadditiv und
(e) ein weiteres Additiv,
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Gemäß einer besonderen Ausführungsform der vorliegenden Erfindung ist es vorgesehen, dass die Beschichtungszusammensetzung
(a1) ein organisches Bindemittel, insbesondere wobei das organische Bindemittel ein Polymer ausgewählt aus der Gruppe von Acrylaten oder Acrylatcoplymeren aufweist,
(a2) ein anorganisches Bindemittel, insbesondere ein siliciumhaltiges Bindemittel,
(b) ein Schmiermittel, insbesondere ein Wachs, in Mengen von 2 bis 15 Gew.-%, bezogen auf die Beschichtungszusammensetzung,
(c) plättchenförmige Partikel, insbesondere Metallflakes,
(c) einen Verdicker und/oder ein Rheologieadditiv,
(d) ein weiteres Additiv und
(e) einen Füllstoff
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Wie zuvor ausgeführt ist die erfindungsgemäße Zusammensetzung eine wässrige Zusammensetzung, d.h. die erfindungsgemäße Zusammensetzung enthält Wasser als Lösungs- oder Dispersionsmittel. Üblicherweise enthält die erfindungsgemäße Zusammensetzung Wasser in Mengen von 40 bis 98 Gew.-%, insbesondere 50 bis 95 Gew.-%, vorzugsweise 60 bis 90 Gew.-%, bevorzugt 60 bis 85 Gew.-%, bezogen auf die Beschichtungszusammensetzung.

Darüber hinaus weist die Beschichtungszusammensetzung vorzugsweise nur geringe Mengen an organischen Lösemitteln und flüchtigen organischen Verbindungen (Volatile Organic Compounds, VOC) auf. Üblicherweise enthält die Beschichtungszusammensetzung organische Lösemittel und flüchtige organische Verbindungen in Mengen von weniger als 3 Gew.-%, insbesondere weniger als 1 Gew.-%, vorzugsweise weniger als 0,5 Gew.-%, bevorzugt weniger als 0,3 Gew.-%, besonders bevorzugt weiniger als 0,1 Gew.-%, bezogen auf die Beschichtungszusammensetzung. Vorzugsweise ist die Beschichtungszusammensetzung frei von organischen Lösemitteln und flüchtigen organischen Verbindungen.

Was nun die Viskosität der erfindungsgemäßen Beschichtungszusammensetzung anbelangt, so kann diese in weiten Bereichen variieren. Besonders gute Ergebnisse werden im Rahmen der vorliegenden Erfindung jedoch erhalten, wenn die Beschichtungszusammensetzung eine dynamische Viskosität bei 20 °C nach Brookfield im Bereich von 2 bis 5.000 mPas, insbesondere 5 bis 1.000 mPas, vorzugsweise 5 bis 500 mPas, bevorzugt 10 bis 100 mPas, insbesondere bevorzugt 30 bis 50 mPas, aufweist. Mit Viskositäten in den vorgenannten Bereichen können besonders dünne und gleichmäßige Topcoat-Beschichtungen erhalten werden.

Es zeigen die Figurendarstellungen gemäß
- Fig. 1:: eine Aufstellung der Reibzahlen von Schrauben, welche mit einer Zinklamellenbeschichtung und nachfolgend mit einem erfindungsgemäßen Topcoat beschichtet wurden;
- Fig. 2: ein Aufstellung der Reibzahlen von Schrauben, welche mit einer Zinklamellenbeschichtung und einem handelsüblichen PTFE-haltigen Topcoat beschichtet wurden.

Weiterer Gegenstand der vorliegenden Erfindung - gemäß einem **zweiten** Aspekt der vorliegenden Erfindung - ist die Verwendung einer vorgenannten Beschichtungszusammensetzung als Topcoat zur Erzeugung einer Beschichtung mit gezielt einstellbarer Reibzahl auf einem metallischen Substrat, insbesondere einem mit einer kathodischen Korrosionsschutzbeschichtung versehenen metallischen Substrat.

Für weitergehende Einzelheiten zu diesem Erfindungsaspekt kann auf die Ausführungen zu den übrigen Erfindungsaspekten verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein Verfahren zur Herstellung einer Beschichtung mit einstellbarer Reibzahl, wobei
(a) in einem ersten Verfahrensschritt ein Substrat, welches zumindest bereichsweise mit einer kathodischen Korrosionsschutzbeschichtung versehen ist, vorgelegt wird,
(b) in einem auf den ersten Verfahrensschritt (a) folgenden zweiten Verfahrensschritt eine zuvor beschriebene Beschichtungszusammensetzung zumindest bereichsweise auf das Substrat, insbesondere die kathodische Korrosionsschutzbeschichtung, aufgebracht wird und
(c) in einem auf den zweiten Verfahrensschritt (b) folgenden dritten Verfahrensschritt die im zweiten Verfahrensschritt (b) aufgebrachte Beschichtungszusammensetzung getrocknet wird.

Im Rahmen der vorliegenden Erfindung wird es insbesondere bevorzugt, wenn im dritten Verfahrensschritt (c) die im zweiten Verfahrensschritt (b) auf das Substrat aufgebrachte Beschichtungszusammensetzung ausgehärtet und/oder vernetzt wird.

Üblicherweise weist das Substrat ein Metall auf oder besteht aus einem Metall. Vorzugsweise besteht das Substrat aus einem Metall. Besonders gute Ergebnisse werden in diesem Zusammenhang erhalten, wenn das Metall ausgewählt ist aus der Gruppe von Eisen, Aluminium, Magnesium und deren Mischungen und Legierungen.

Im Rahmen der vorliegenden Erfindung wird es besonders bevorzugt, wenn das Metall ausgewählt ist aus Eisen und dessen Legierungen, insbesondere ein Stahl ist.

Unter einem Substrat ist im Rahmen der vorliegenden Erfindung ein Objekt zu verstehen, welches mit der Beschichtungszusammensetzung beschichtet werden kann.

Üblicherweise ist das Substrat im Rahmen der vorliegenden Erfindung ausgewählt aus Blechen, Formteilen, Kleinteilen und deren Mischungen.

Besonders bevorzugt wird es in diesem Zusammenhang, wenn das Substrat ein Kleinteil ist, vorzugsweise Massenschüttgut, insbesondere ausgewählt aus Schrauben, Muttern, Bolzen, Unterlegscheiben, Nieten und deren Mischungen.

Besonders bevorzugt ist es im Rahmen der vorliegenden Erfindung, wenn das Substrat eine Schraube oder eine Mutter ist, insbesondere eine Schraube.

Speziell bei Schrauben kommen die spezifischen Vorteile der erfindungsgemäßen Beschichtungszusammensetzung und des erfindungsgemäßen Verfahrens, nämlich die gezielte Einstellung der Reibzahl, besonders zum Tragen.

Was die kathodische Korrosionsschutzbeschichtung anbelangt, welche zumindest bereichsweise, vorzugsweise vollflächig, auf das Substrat aufgebracht ist, so weist diese üblicherweise ein Metall ausgewählt aus der Gruppe von Zink, Aluminium, Magnesium, Nickel und deren Mischungen und Legierungen auf.

Vorzugsweise weist die kathodische Korrosionsschutzbeschichtung Zink und dessen Legierungen auf.

Es hat sich im Rahmen der vorliegenden Erfindung bewährt, wenn die kathodische Korrosionsschutzbeschichtung ausgewählt ist aus der Gruppe von zinkhaltigen Beschichtungen, insbesondere galvanischen Zinkbeschichtungen, insbesondere galvanischen Zink-Nickel-Beschichtungen, Feuerverzinkungsbeschichtungen, Zinkpulverbeschichtungen, insbesondere Zinklacken, und Zinklamellenbeschichtungen. Vorzugsweise ist die kathodische Korrosionsschutzbeschichtung ausgewählt aus der Gruppe von galvanischen Zinkbeschichtungen, insbesondere galvanischen Zink-Nickel-Beschichtungen, Zinkpulverbeschichtungen und Zinklamellenbeschichtungen. Zinkpulverbeschichtungen und Zinklamellenbeschichtungen können dabei insbesondere auch aus Zinklegierungen bestehen. Vorzugsweise weisen die Zinklegierungen neben Zink noch Aluminium und/oder Magnesium auf, vorzugweise Aluminium und Magnesium.

**Im** Rahmen der vorliegenden Erfindung hat es sich bewährt, wenn in Verfahrensschritt (b) die Beschichtungszusammensetzung mit einer Schichtdicke im Bereich von 1 bis 12 µm, insbesondere 1 bis 10 µm, vorzugsweise 1 bis 8 µm, besonders bevorzugt 2 bis 8 µm, ganz besonders bevorzugt 2 bis 7 µm, auf das Substrat bzw. die kathodische Korrosionsschutzbeschichtung aufgebracht wird.

Die Beschichtungszusammensetzung kann dabei in Verfahrensschritt (b) durch jedes geeignete Verfahren aufgebracht werden.

Üblicherweise wird in Verfahrensschritt (b) die Beschichtungszusammensetzung jedoch mittels Spritzen, Streichen, Rakeln, Walzen, Tauchen oder Tauchschleudern auf das Substrat aufgebracht. Besonders gute Ergebnisse werden dabei erhalten, wenn in Verfahrensschritt (b) die Beschichtungszusammensetzung mittels Tauchen oder Tauchschleudern aufgebracht wird. Tauchen oder Tauchschleudern eignet sich insbesondere zur Beschichtung von Massenschuttgütern, wie beispielsweise Kleinteilen. Besonders bevorzugt wird es im Rahmen der vorliegenden Erfindung, wenn die Beschichtungszusammensetzung vollflächig auf das Substrat bzw. die kathodische Korrosionsschutzbeschichtung aufgebracht wird.

Die Temperatur, bei welcher die Beschichtungszusammensetzung in Verfahrensschritt (c) getrocknet wird, kann in Abhängigkeit des gewählten Substrats sowie der darauf aufgebrachten kathodischen Korrosionsschutzbeschichtung und der aufgebrachten Beschichtungszusammensetzung in weiten Bereichen variieren.

Es hat sich jedoch als zweckdienlich erwiesen, wenn in Verfahrensschritt (c) die Beschichtungszusammensetzung bei Temperaturen im Bereich von 20 bis 300 °C, insbesondere 30 bis 250 °C, vorzugsweise 40 bis 200 °C, bevorzugt 50 bis 180 °C, besonders bevorzugt 55 bis 160 °C, ganz besonders bevorzugt 60 bis 150 °C, getrocknet wird.

Bei den vorgenannten Temperaturen findet üblicherweise eine schnelle Trocknung bzw. Härtung und/oder Vernetzung der Bindemittelsysteme statt, wobei eine Zersetzung des organischen Bindemittels vermieden wird.

Gleichermaßen hat es sich als zweckmäßig erwiesen, wenn in Verfahrensschritt (c) die Beschichtungszusammensetzung für einen Zeitraum von 1 bis 30 Minuten, insbesondere 2 bis 25 Minuten, vorzugsweise 3 bis 20 Minuten, bevorzugt 5 bis 15 Minuten, getrocknet wird.

Wie zuvor dargelegt, ist es im Rahmen der vorliegenden Erfindung möglich, die Reibzahl der resultierenden Beschichtung, insbesondere des Topcoats, gezielt einzustellen. Besonders gute Ergebnisse werden dabei erhalten, wenn die Reibzahl des beschichteten Substrats durch die Aufbringung der Beschichtungszusammensetzung im Bereich von 0,09 bis 0,16, bestimmt nach DIN EN ISO 16047:2013-01, eingestellt wird. Die Einstellung der Reibzahl erfolgt dabei insbesondere durch die Abstimmung der einzelnen Komponenten der Beschichtungszusammensetzung, insbesondere der die Menge an organischem und anorganischem Bindemittel, der Art und der Menge an Schmiermittel sowie der Menge an plättchenförmigen Partikeln .

Für weitergehende Einzelheiten zu diesem Erfindungsaspekt kann auf die vorigen Ausführungen zu den übrigen Erfindungsaspekten verwiesen werden, welche in Bezug auf die erfindungsgemäße Verwendung entsprechend gelten.

Schließlich ist weiterer Gegenstand der vorliegenden Erfindung - gemäß einem **vierten** Aspekt der vorliegenden Erfindung - ein metallisches Substrat aufweisend eine Beschichtung, welche insbesondere mit einer vorgenannten Beschichtungszusammensetzung oder nach einem vorbeschriebenen Verfahren erhältlich ist, wobei die Beschichtung ein Schmiermittel in Mengen von mindestens 4,5 Gew.-%, bezogen auf die Beschichtung, aufweist.

Es hat sich als vorteilhaft erwiesen, wenn die Beschichtung das Schmiermittel in Mengen von mehr als 4,5 Gew.-%, insbesondere mehr als 5 Gew-%, vorzugsweise mehr als 10 Gew.-%, bevorzugt mehr als 12 Gew.-%, besonders bevorzugt mehr als 15 Gew.-%, bezogen auf die Beschichtung, enthält.

Gleichermaßen werden gute Ergebnisse erhalten, wenn die Beschichtung das Schmiermittel in Mengen von weniger als 35 Gew.-%, insbesondere weniger als 30 Gew.-% -%, vorzugsweise weniger als 25 Gew.-%, bevorzugt weniger als 22 Gew.-%, besonders bevorzugt weniger als 20 Gew.-%, bezogen auf die Beschichtung, enthält.

Weiterhin wird es Rahmen der Erfindung bevorzugt, wenn die Beschichtung das Schmiermittel in Mengen von 4,5 bis 35 Gew.-%, insbesondere 5 bis 30 Gew.-%, vorzugsweise 10 bis 25 Gew.-%, bevorzugt 12 bis 22 Gew.-%, besonders bevorzugt 15 bis 20 Gew.-%, bezogen auf die Beschichtung, enthält.

Üblicherweise weist das Substrat zwischen der Beschichtung, insbesondere dem Topcoat, noch eine kathodische Korrosionsschutzbeschichtung auf, insbesondere in Form eines Basecoats.

Die Beschichtung, insbesondere der Topcoat, weist dabei vorzugsweise eine Schichtdicke im Bereich von 1 bis 10 µm, insbesondere 1 bis 8 µm, vorzugsweise 1 bis 7 µm, bevorzugt 2 bis 7 µm, besonders bevorzugt 2 bis 6 µm, auf.

Üblicherweise enthält die Beschichtung, insbesondere der Topcoat, das Bindemittel in Mengen von 30 bis 90 Gew.-%, insbesondere 39 bis 90 Gew.-%, vorzugsweise 45 bis 80 Gew.-%, bevorzugt 50 bis 70 Gew.-%, besonders bevorzugt 55 bis 65 Gew.-%, bezogen auf die Beschichtung, insbesondere den Topcoat.

Wenn im Rahmen der vorliegenden Erfindung eine Mischung aus organischen und anorganischen Bindemitteln verwendet wird, so hat es sich bewährt, wenn die Beschichtung, insbesondere der Topcoat, das organische Bindemittel in Mengen von 5 bis 35 Gew.-%, insbesondere 9 bis 35 Gew.-%, vorzugsweise 15 bis 32 Gew.-%, bevorzugt 20 bis 30 Gew.-%, besonders bevorzugt 25 bis 30 Gew.-%, bezogen auf die Beschichtung, insbesondere den Topcoat, enthält.

Gleichermaßen wir des im Rahmen der vorliegenden Erfindung bevorzugt, wenn die Beschichtung, insbesondere der Topcoat, das anorganische Bindemittel in Mengen von 25 bis 75 Gew.-%, insbesondere 30 bis 60 Gew.-%, vorzugsweise 30 bis 50 Gew.-%, bevorzugt 30 bis 40 Gew.-%, besonders bevorzugt 32 bis 35 Gew.-%, bezogen auf die Beschichtung, insbesondere den Topcoat, enthält.

Es hat sich weiterhin bewährt, wenn das gewichtsbezogene Verhältnis von anorganischem Bindemittel zu organischem Bindemittel im Bereich von 1 : 1 bis 2,25 : 1, insbesondere 1,1 : 1 bis 2,0 : 1, vorzugweise 1,2 : 1 bis 1,5 : 1, bezogen auf das Gewicht an anorganischem Bindemittel und das Gewicht an organischem Bindemittel in der Beschichtung, insbesondere dem Topcoat, liegt.

Ebenfalls wird ist es bevorzugt, wenn die Beschichtung, insbesondere der Topcoat, die plättchenförmigen Partikel in Mengen von 10 bis 30 Gew.-%, vorzugsweise 15 bis 25 Gew.-%, bevorzugt 17 bis 22 Gew.-%, bezogen auf die Beschichtung, enthält.

Besonders gute Ergebnisse werden erhalten, wenn das gewichtsbezogene Verhältnis von plättchenförmigen Partikeln zu Schmiermittel im Bereich von 0,8 : 1 bis 1,8 : 1, insbesondere 1 : 1 bis 1,6 : 1, vorzugweise 1,1 : 1 bis 1,4 : 1, bezogen auf das Gewicht an plättchenförmigen Partikeln und das Gewicht an Schmiermittel in der Beschichtung, insbesondere dem Topcoat, liegt.

Weiterhin werden sehr gute Ergebnisse erhalten, wenn spezielle Verhältnisse von plättchenförmigen Partikeln zum Bindemittel vorliegen. So hat es sich bewährt, wenn gewichtsbezogene Verhältnis von plättchenförmigen Partikeln zu Bindemittel im Bereich von 1 : 2 bis 1 : 17, insbesondere 1 : 2,4 bis 1 : 9, vorzugweise 1 : 2,5 bis 1: 4, bevorzugt 1 : 2,7 bis 1 : 3,2, bezogen auf das Gewicht an plättchenförmigen Partikeln und das Gewicht an Bindemittel in der Beschichtung, insbesondere dem Topcoat, liegt.

Wenn die Beschichtung eine Mischung aus organischen und anorganischen Bindemitteln enthält, hat es sich bewährt, wenn das gewichtsbezogene Verhältnis von plättchenförmigen Partikeln zu organischem Bindemittel im Bereich von 1 : 0,8 bis 1 : 5, insbesondere 1 : 1 bis 1 : 3, vorzugweise 1 : 1 bis 1: 2, bevorzugt 1 : 1,1 bis 1 : 1,4, bezogen auf das Gewicht an plättchenförmigen Partikeln und das Gewicht an organischem Bindemittel in der Beschichtung, insbesondere dem Topcoat, liegt.

Gleichermaßen hat es sich bewährt, wenn das gewichtsbezogene Verhältnis von plättchenförmigen Partikeln zu anorganischem Bindemittel im Bereich von 1 : 1,2 bis 1 : 12, insbesondere 1 : 1,4 bis 1 : 6, vorzugweise 1 : 1,5 bis 1: 2, bevorzugt 1 : 1,6 bis 1 : 1,8 bezogen auf das Gewicht an plättchenförmigen Partikeln und das Gewicht an anorganischem Bindemittel in der Beschichtung, insbesondere dem Topcoat, liegt.

Weiterhin wird es bevorzugt, wenn die Reibzahl des beschichteten Substrats im Bereich von 0,09 bis 0,16, bestimmt nach DIN EN ISO 16047:2013-01, variiert.

Für weitergehende Einzelheiten zu dem erfindungsgemäßen Substrat kann auf die obigen Ausführungen zu den übrigen Erfindungsaspekten verwiesen werden, welche in Bezug auf die erfindungsgemäße Substrat entsprechend gelten.

Der Gegenstand der vorliegenden Erfindung wird nachfolgend anhand der Ausführungsbeispiele in exemplarischer und nicht beschränkender Weise verdeutlicht.

### Ausführungsbeispiele

Um die vorliegende Erfindung und ihre Vorzüge weiter zu verdeutlichen, werden Versuchsreihen mit erfindungsgemäßen Topcoat-Zusammensetzungen durchgeführt. Hierzu wird die Beschichtungszusammensetzung zunächst auf Schrauben aufgebracht und gehärtet. Anschließend werden die Gleit- und Reibeigenschaften der Schrauben bestimmt. Die Ergebnisse werden anschließend mit den Reibzahlen von beschichteten Schrauben, welche mit PTFE-haltigen Topcoat-Zusammensetzungen des Standes der Technik beschichtet sind, verglichen.

### 1. Erfindungsgemäßer Topcoat

Die erfindungsgemäße Beschichtungszusammensetzung 1 zur Herstellung eines Topcoats 1 weist ein Reinacrylat als organisches Bindemittel und eine Mischung aus Silanhydrolysat und Lithiumwasserglas als anorganisches Bindemittel auf. Die Beschichtungszusammensetzung 1 weist ferner ein mikronisiertes PE-Wachs als Schmiermittel sowie Aluminiumflakes als plättchenförmige Partikel und weitere Additive auf.

Die Zusammensetzung ist in der nachfolgenden Tabelle 1 angegeben.

**Tabelle 1: Erfindungsgemäße Beschichtungszusammensetzung 1**

| Zusammensetzung | | 1 |
|---|---|---|
| | | |
| Acrylatdispersion (50 % Feststoffanteil) | [Gew.-%] | 16 |
| Lithiumwasserglas (25 % Feststoffanteil) | [Gew.-%] | 37 |
| Silanhydrolysat | [Gew.-%] | 3 |
| Mikronisiertes PE-Wachs | [Gew.-%] | 5 |
| Aluminiumflakes | [Gew.-%] | 9 |
| Entschäumer | [Gew.-%] | 0,2 |
| Verdicker | [Gew.-%] | 0,3 |
| Netzmittel | [Gew.-%] | 0,5 |
| Wasser | [Gew.-%] | Ad 100 |

### 2. Vergleich eines erfindungsgemäßen Topcoats mit einem PTFE-haltigen Topcoat

Es werden jeweils 5 als Innenträger ausgestaltete Schrauben M 10x65 zunächst mit einem Zinklamellen-Basecoat ohne Schmier- und Gleiteigenschaften (Produkt DELTA-PROTEKT KL 120 der Fa. Dörken) und einer Schichtdicke von 10 µm beschichtet.

Anschließend werden ein erfindungsgemäßer Topcoat bzw. ein PTFE-haltiger Topcoat auf die derart beschichteten Schrauben aufgebracht und ausgehärtet. Die Schichtdicke beträgt jeweils ca. 3 µm. Als PTFE-haltiger Topcoat wird das Produkt DELTA-PROTEKT VH 301.1 GZ, welches eine Mischung aus einem anorganischen und einem organischen Bindemittel und PTFE-Partikeln als Schmiermittel aufweist, der Fa. Dörken verwendet.

Anschließend wird die Reibzahl gemäß DIN EN ISO 16047:2013-01 mit Stahl als Gegenlage bestimmt. Die Schrauben werden jeweils fünfmal angezogen und wieder gelöst. Die Reibzahlen werden am Kopf (µ_{Kopf}) und am Gewinde (µ_{Gcewinde}) gemessen und anschließend die Gesamtreibzahl (µ_{Gesamt}) bestimmt.

Die einzelnen Messwerte sind in Tabelle 2 für den erfindungsgemäßen Topcoat und in Tabelle 3 für den Vergleich wiedergegeben.

**Tabelle 2: Reibzahlen von mit dem erfindungsgemäßen Topcoat beschichteten Schrauben**

| | Anzug # | Schraube1 | Schraube2 | Schraube3 | Schraube4 | Schraube5 |
|---|---|---|---|---|---|---|
| | | | | | | |
| µ__{Gesamt} | 1 | 0,135 | 0,135 | 0,132 | 0,131 | 0,136 |
| | 2 | 0,137 | 0,132 | 0,137 | 0,133 | 0,137 |
| | 3 | 0,138 | 0,133 | 0,136 | 0,132 | 0,135 |
| | 4 | 0,136 | 0,131 | 0,132 | 0,130 | 0,134 |
| | 5 | 0,136 | 0,133 | 0,128 | 0,128 | 0,134 |
| | | | | | | |
| µ_{Gewinde} | 1 | 0,140 | 0,140 | 0,138 | 0,142 | 0,144 |
| | 2 | 0,138 | 0,132 | 0,138 | 0,134 | 0,134 |
| | 3 | 0,138 | 0,131 | 0,138 | 0,133 | 0,137 |
| | 4 | 0,136 | 0,130 | 0,137 | 0,133 | 0,136 |
| | 5 | 0,136 | 0,131 | 0,137 | 0,132 | 0,137 |
| | | | | | | |
| µ_{Kopf} | 1 | 0,131 | 0,131 | 0,129 | 0,123 | 0,129 |
| | 2 | 0,136 | 0,132 | 0,137 | 0,133 | 0,134 |
| | 3 | 0,138 | 0,135 | 0,135 | 0,131 | 0,134 |
| | 4 | 0,136 | 0,131 | 0,128 | 0,128 | 0,133 |
| | 5 | 0,136 | 0,134 | 0,122 | 0,124 | 0,132 |

**Tabelle 3: Reibzahlen von mit einem PTFE-haltigen Topcoat beschichteten Schrauben**

| | Anzug # | Schraube1 | Schraube2 | Schraube3 | Schraube4 | Schraube5 |
|---|---|---|---|---|---|---|
| | | | | | | |
| µ__{Gesamt} | 1 | 0,115 | 0,110 | 0,112 | 0,110 | 0,111 |
| | 2 | 0,126 | 0,129 | 0,129 | 0,120 | 0,133 |
| | 3 | 0,130 | 0,135 | 0,134 | 0,123 | 0,139 |
| | 4 | 0,132 | 0,138 | 0,137 | 0,127 | 0,142 |
| | 5 | 0,135 | 0,144 | 0,143 | 0,130 | 0,148 |
| | | | | | | |
| µ_{Gewinde} | 1 | 0,154 | 0,145 | 0,139 | 0,138 | 0,141 |
| | 2 | 0,157 | 0,160 | 0,160 | 0,145 | 0,160 |
| | 3 | 0,154 | 0,158 | 0,162 | 0,147 | 0,160 |
| | 4 | 0,155 | 0,155 | 0,159 | 0,148 | 0,159 |
| | 5 | 0,155 | 0,155 | 0,160 | 0,149 | 0,158 |
| | | | | | | |
| µ_{Kopf} | 1 | 0,088 | 0,086 | 0,093 | 0,090 | 0,090 |
| | 2 | 0,105 | 0,108 | 0,107 | 0,102 | 0,114 |
| | 3 | 0,113 | 0,119 | 0,115 | 0,106 | 0,125 |
| | 4 | 0,116 | 0,125 | 0,121 | 0,112 | 0,130 |
| | 5 | 0,121 | 0,136 | 0,131 | 0,116 | 0,141 |

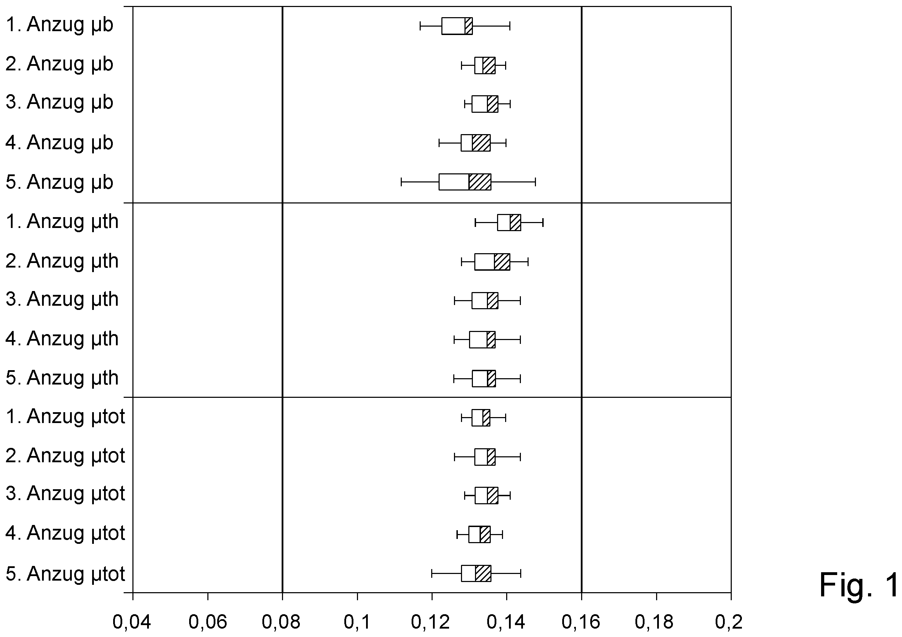

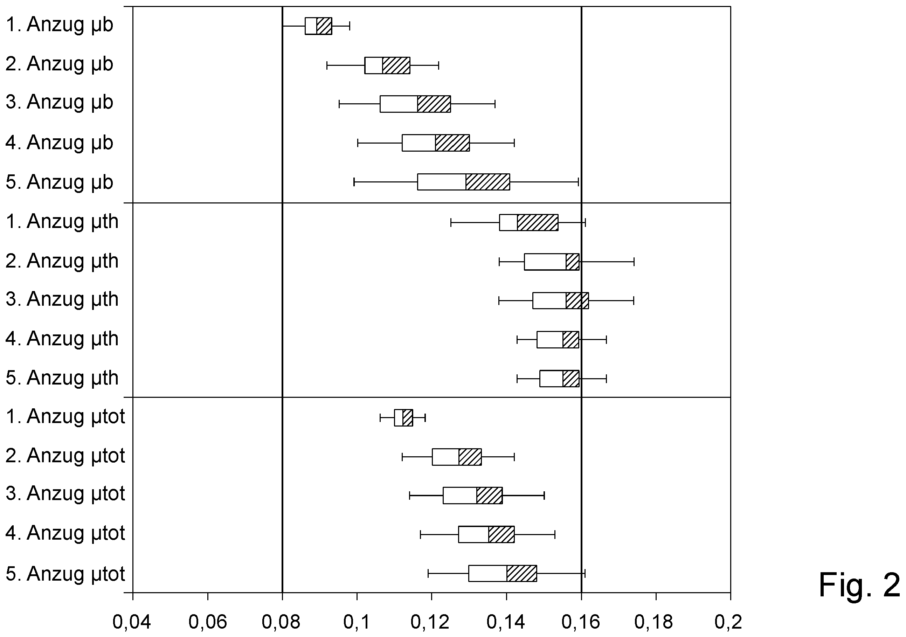

In den Figuren 1 und 2 sind jeweils die Spannbreiten der Messwerte, die 25 %-Perzentile der Median und die 75 %-Perzentile zu den Messwerten aus den Tabellen 2 und 3 aufgetragen. In den Figuren 1 und 2 steht µb für die am Kopf der Schraube gemessene Reibzahl, µth für die am Gewinde gemessene Reibzahl und µtot für die Gesamtreibzahl.

Es zeigt sich, dass sowohl der erfindungsgemäße Topcoat (Fig. 1) als auch das PTFE-haltige Produkt des Standes der Technik (Fig. 2) jeweils sowohl für die am Schraubenkopf und am Schraubengewinde bestimmte Reibzahl als auch für die Gesamtreibzahl im geforderten Reibzahlfenster von 0,09 bis 0,16 liegen, wobei der erfindungsgemäße Topcoat ein deutlich geringere Streuung der einzelnen Messwerte als das Produkt des Standes der Technik aufweist.

### 3. Einfluss der Einbrenntemperatur

In einer weiteren Versuchsreihe werden 5 als Innenträger ausgestaltete Schrauben M 10x65 mit einem Zinklamellen-Basecoat beschichtet (Produkt DELTA-PROTEKT KL 100 der Fa. Dörken). Die Schichtdicke liegt nach Aushärtung bei ca. 10 µm.

Anschließend wird die derart beschichtete Schraube mit der Beschichtungszusammensetzung 1 gemäß Tabelle 1 beschichtet. Das Schichtgewicht beträgt nach Aushärten zwischen 2,5 und 5 g/m². Die Einbrenntemperaturen werden zwischen 60 und 200 °C variiert und die Einbrennzeit beträgt jeweils 20 Minuten. Anschließend wird gemäß DIN EN ISO 16047:2013-01 die Reibzahl mit Stahl als Gegenlage bestimmt. Die Daten der Reibzahlmessungen sind in Tabelle 4 wiedergegeben.

**Tabelle 4: Einfluss der Einbrenntemperatur auf die Reibzahl**

| G | T | | Anzug 1 | Anzug 2 | Anzug 3 | Anzug 4 | Anzug 5 |
|---|---|---|---|---|---|---|---|
| 2,5 | 60 | µ_{Kopf} | 0,09 | 0,10 | 0,10 | 0,11 | 0,11 |
| | | µ_{Gewinde} | 0,11 | 0,12 | 0,12 | 0,12 | 0,12 |
| | | µ_{Gesamt} | 0,10 | 0,10 | 0,11 | 0,11 | 0,12 |
| 3,6 | 60 | µ_{Kopf} | 0,10 | 0,11 | 0,12 | 0,12 | 0,12 |
| | | µ_{Gewinde} | 0,11 | 0,12 | 0,12 | 0,12 | 0,12 |
| | | µ_{Gesamt} | 0,11 | 0,12 | 0,12 | 0,12 | 0,12 |
| 5 | 60 | µ_{Kopf} | 0,08 | 0,09 | 0,09 | 0,10 | 0,10 |
| | | µ_{Gewinde} | 0,10 | 0,11 | 0,11 | 0,12 | 0,12 |
| | | µ_{Gesamt} | 0,09 | 0,10 | 0,10 | 0,11 | 0,11 |
| 2,5 | 130 | µ_{Kopf} | 0,10 | 0,11 | 0,12 | 0,12 | 0,13 |
| | | µ_{Gewinde} | 0,12 | 0,12 | 0,12 | 0,12 | 0,12 |
| | | µ_{Gesamt} | 0,11 | 0,11 | 0,12 | 0,12 | 0,12 |
| 3,6 | 130 | µ_{Kopf} | 0,11 | 0,12 | 0,13 | 0,13 | 0,13 |
| | | µ_{Gewinde} | 0,11 | 0,12 | 0,12 | 0,12 | 0,12 |
| | | µ_{Gesamt} | 0,11 | 0,12 | 0,12 | 0,13 | 0,13 |
| 5 | 130 | µ_{Kopf} | 0,08 | 0,09 | 0,09 | 0,10 | 0,10 |
| | | µ_{Gewinde} | 0,11 | 0,11 | 0,11 | 0,12 | 0,12 |
| | | µ_{Gesamt} | 0,09 | 0,10 | 0,10 | 0,11 | 0,11 |
| 2,5 | 200 | µ_{Kopf} | 0,12 | 0,13 | 0,14 | 0,14 | 0,14 |
| | | µ_{Gewinde} | 0,13 | 0,13 | 0,13 | 0,13 | 0,13 |
| | | µ_{Gesamt} | 0,13 | 0,13 | 0,13 | 0,13 | 0,13 |
| 3,6 | 200 | µ_{Kopf} | 0,11 | 0,12 | 0,12 | 0,12 | 0,12 |
| | | µ_{Gewinde} | 0,13 | 0,13 | 0,13 | 0,12 | 0,12 |
| | | µ_{Gesamt} | 0,12 | 0,12 | 0,12 | 0,12 | 0,12 |
| 5 | 200 | µ_{Kopf} | 0,09 | 0,11 | 0,11 | 0,12 | 0,12 |
| | | µ_{Gewinde} | 0,13 | 0,13 | 0,13 | 0,14 | 0,14 |
| | | µ_{Gesamt} | 0,11 | 0,12 | 0,12 | 0,12 | 0,12 |

| | | | | | | | |
|---|---|---|---|---|---|---|---|
| G: Schichtgewicht in g/m² T: Einbrenntemperatur in °C | | | | | | | |

Es zeigt sich, dass die Reibzahlen nahezu konstant bleiben und nicht, wie zu erwarten wäre, bei höheren Einbrenntemperaturen ansteigen.

## Patentansprüche

1. Wässrige Beschichtungszusammensetzung zur Herstellung einer Beschichtung, insbesondere eines Topcoats, mit einstellbarer Reibzahl,
**dadurch gekennzeichnet,**
**dass** die Zusammensetzung enthält
(a) ein organisches und ein anorganisches Bindemittel, wobei das organische Bindemittel ein organisches Polymer aufweist oder aus einem organischen Polymer besteht, und wobei das anorganische Bindemittel ausgewählt ist aus Silanen, Silanhydrolysaten, kolloidaler Kieselsäure, Silikaten und deren Mischungen,
(b) ein Schmiermittel ausgewählt aus der Gruppe von Wachsen, Kunststoffpartikeln, mikronisiertem Schwefel und deren Mischungen in Mengen von 2 bis 15 Gew.-%, bezogen auf die Beschichtungszusammensetzung, und
(c) plättchenförmige Partikel ausgewählt aus der Gruppe von Metallflakes, Graphen, Bornitrid, Glasflakes, Schichtsilikaten und deren Mischungen in Mengen von 4 bis 12 Gew.-%, bezogen auf die Beschichtungszusammensetzung, und
wobei die Beschichtungszusammensetzung frei ist von organischen fluorhaltigen Verbindungen.

2. Beschichtungszusammensetzung nach Anspruch 1, **dadurch gekennzeichnet, dass** die Beschichtungszusammensetzung das Bindemittel in Mengen von 6 bis 40 Gew.-%, insbesondere 9 bis 33 Gew.-%, vorzugsweise 11 bis 27 Gew.-%, bevorzugt 13 bis 22 Gew.-%, bezogen auf die Beschichtungszusammensetzung, enthält.

3. Beschichtungszusammensetzung nach einem der vorangehenden Ansprüche, **dadurch gekennzeichnet, dass** das organische Polymer ausgewählt ist aus der Gruppe von Acrylaten, Polyurethanen, Polyvinylacetat und deren Mischungen und Copolymeren.

4. Beschichtungszusammensetzung nach einem der vorangehenden Ansprüche, **dadurch gekennzeichnet, dass** das Polymer erhältlich ist aus Monomeren ausgewählt aus der Gruppe von Acrylsäure, Estern der Acrylsäure mit C₁- bis C₁₀-Alkoholen, Methacrylsäure, Estern der Methacrylsäure mit C₁- bis C₁₀-Alkoholen, Fumarsäure, Maleinsäure und deren Mischungen und Copolymeren, insbesondere Acrylsäure, Estern der Acrylsäure mit C₁-bis C₁₀-Alkoholen, Methacrylsäure und Estern der Methacrylsäure mit C₁- bis C₁₀-Alkoholen und deren Mischungen und Copolymeren.

5. Beschichtungszusammensetzung nach einem der vorangehenden Ansprüche, **dadurch gekennzeichnet, dass** das Schmiermittel ausgewählt ist aus der Gruppe von organischen Schmiermitteln, anorganischen Schmiermitteln und deren Mischungen, vorzugsweise organischen Schmiermitteln.

6. Beschichtungszusammensetzung nach einem der vorangehenden Ansprüche, **dadurch gekennzeichnet, dass** das Schmiermittel ausgewählt ist aus der Gruppe von Polyetherketon (PEK), Polyetheretherketon (PEEK), Polyphenylensulfid (PPS), Polyethersulfon (PES), Polyetherimid (PEI), Polyamidimid (PAI) und deren Mischungen, vorzugsweise Wachsen.

7. Beschichtungszusammensetzung nach einem der vorangehenden Ansprüche, **dadurch gekennzeichnet, dass** die Beschichtungszusammensetzung das Schmiermittel in Mengen von 3 bis 12 Gew.-%, bevorzugt 4 bis 10 Gew.-%, besonders bevorzugt 4,5 bis 8 Gew.-%, bezogen auf die Beschichtungszusammensetzung, enthält.

8. Beschichtungszusammensetzung nach einem der vorangehenden Ansprüche, **dadurch gekennzeichnet, dass** die Beschichtungszusammensetzung die plättchenförmigen Partikel in Mengen von 4 bis 10 Gew.-%, bevorzugt 5 bis 8 Gew.-%, bezogen auf die Beschichtungszusammensetzung, aufweist.

9. Verwendung einer Beschichtungszusammensetzung nach einem der Ansprüche 1 bis 8 als Topcoat zur Erzeugung einer Beschichtung mit einstellbarer Reibzahl auf einem metallischen Substrat, insbesondere einem mit einer kathodischen Korrosionsschutzbeschichtung versehenen metallischen Substrat.

10. Verfahren zur Herstellung einer Beschichtung mit gezielt einstellbarer Reibzahl, **dadurch gekennzeichnet, dass**
(a) in einem ersten Verfahrensschritt ein Substrat, welches zumindest bereichsweise mit einer kathodischen Korrosionsschutzbeschichtung versehen ist, vorgelegt wird,
(b) in einem auf den ersten Verfahrensschritt (a) folgenden zweiten Verfahrensschritt eine Beschichtungszusammensetzung gemäß einem der Ansprüche 1 bis 8 zumindest bereichsweise auf das Substrat aufgebracht wird und
(c) in einem auf den zweiten Verfahrensschritt (b) folgenden dritten Verfahrensschritt die im zweiten Verfahrensschritt (b) aufgebrachte Beschichtungszusammensetzung getrocknet wird.

11. Verfahren nach Anspruch 10, **dadurch gekennzeichnet, dass** die Reibzahl des beschichteten Substrats im Bereich von 0,09 bis 0,16, bestimmt nach DIN EN ISO 16047:2013-01, eingestellt wird.

12. Metallisches Substrat mit einer Beschichtung, erhältlich mit einer Beschichtungszusammensetzung nach einem der Ansprüche 1 bis 8 oder nach einem Verfahren gemäß einem der Ansprüche 10 oder 11, wobei die Beschichtung ein Schmiermittel in Mengen von mindestens 4,5 Gew.-%, bezogen auf die Beschichtung, aufweist.

13. Metallisches Substrat nach Anspruch 12, **dadurch gekennzeichnet, dass** die Beschichtung das Schmiermittel in Mengen von 4,5 bis 35 Gew.-%, insbesondere 5 bis 30 Gew.-%, vorzugsweise 10 bis 25 Gew.-%, bevorzugt 12 bis 22 Gew.-%, besonders bevorzugt 15 bis 20 Gew.-%, bezogen auf die Beschichtung, enthält.

14. Metallisches Substrat nach Anspruch 12 oder 13, **dadurch gekennzeichnet, dass** die Beschichtung, die plättchenförmigen Partikel in Mengen von 10 bis 30 Gew.-%, vorzugsweise 15 bis 25 Gew.-%, bevorzugt 17 bis 22 Gew.-%, bezogen auf die Beschichtung, enthält.

## Claims

1. An aqueous coating composition for producing a coating, particularly a topcoat, with an adjustable coefficient of friction,
**characterized in**
**that** the composition contains
(a) an organic and an inorganic binder, wherein the organic binder comprises an organic polymer or consists of an organic polymer, and wherein the inorganic binder is selected from silanes, silane hydrolysates, colloidal silica, silicates, and mixtures thereof,
(b) a lubricant selected from the group of waxes, plastic particles, micronized sulfur, and mixtures thereof, in amounts of 2 to 15 wt.%, based on the coating composition, and
(c) platelet -shaped particles selected from the group consisting of metal flakes, graphene, boron nitride, glass flakes, layered silicates, and mixtures thereof, in amounts of 4 to 12 wt.%, based on the coating composition, and
wherein the coating composition is free of organic fluorine-containing compounds.

2. The coating composition according to claim 1, **characterized in that** the coating composition contains the binder in amounts of 6 to 40 wt.-%, in particular 9 to 33 wt.-%, preferably 11 to 27 wt.-%, preferred 13 to 22 wt.-%, based on the coating composition.

3. The coating composition according to any one of the preceding claims, **characterized in that** the organic polymer is selected from the group of acrylates, polyurethanes, polyvinyl acetate, and mixtures and copolymers thereof.

4. The coating composition according to any of the preceding claims, **characterized in that** the polymer is obtainable from monomers selected from the group of acrylic acid, esters of acrylic acid with C1 to C10 alcohols, methacrylic acid, esters of methacrylic acid with C1 to C10 alcohols, fumaric acid, maleic acid and mixtures and copolymers thereof, in particular acrylic acid, esters of acrylic acid with C1- to C10-alcohols, methacrylic acid, and esters of methacrylic acid with C1 to C10 alcohols, as well as mixtures and copolymers thereof.

5. The coating composition according to any one of the preceding claims, **characterized in that** the lubricant is selected from the group of organic lubricants, inorganic lubricants, and mixtures thereof, preferably organic lubricants.

6. The coating composition according to any of the preceding claims, **characterized in that** the lubricant is selected from the group of polyetherketone (PEK), polyetheretherketone (PEEK), polyphenylene sulfide (PPS), polyethersulfone (PES), polyetherimide (PEI), polyamideimide (PAI), and mixtures thereof, preferably waxes.

7. The coating composition according to any one of the preceding claims, **characterized in that** the coating composition contains the lubricant in amounts of 3 to 12 wt.%, preferably 4 to 10 wt.%, more preferably 4.5 to 8 wt.%, based on the coating composition.

8. The coating composition according to any one of the preceding claims, **characterized in that** the coating composition comprises the platelet-shaped particles in amounts of 4 to 10 wt.%, preferably 5 to 8 wt.%, based on the coating composition.

9. Use of a coating composition according to any one of claims 1 through 8 as a topcoat for producing a coating with an adjustable coefficient of friction on a metallic substrate, in particular a metallic substrate provided with a cathodic corrosion protection coating.

10. A method for producing a coating with a specifically adjustable coefficient of friction, **characterized in that**
(a) in a first step of the process, a substrate that is provided, at least in some areas, with a cathodic corrosion-protective coating is presented,
(b) in a second process step following the first process step (a), a coating composition according to one of claims 1 through 8 is applied at least in some areas to the substrate, and
(b) in a third process step following the second process step (b), the coating composition applied in the second process step (b) is dried.

11. The method according to claim 10, **characterized in that** the coefficient of friction of the coated substrate is set within the range of 0.09 to 0.16, as determined in accordance with DIN EN ISO 16047:2013-01.

12. A metallic substrate having a coating obtainable using a coating composition according to any one of claims 1 through 8 or using a method according to any one of claims 10 or 11, wherein the coating comprises a lubricant in an amount of at least 4.5% by weight, based on the coating.

13. The metallic substrate according to claim 12, **characterized in that** the coating contains the lubricant in amounts of 4.5 to 35 wt.-%, in particular 5 to 30 wt.-%, preferably 10 to 25 wt.-%, more preferred 12 to 22 wt.-%, more preferably 15 to 20 wt.-%, based on the coating.

14. The metallic substrate according to claim 12 or 13, **characterized in that** the coating contains platelet-shaped particles in amounts of 10 to 30 wt.-%, preferably 15 to 25 wt.-%, preferred 17 to 22 wt.-%, based on the coating.

## Revendications

1. Composition de revêtement aqueuse destinée à la réalisation d'un revêtement, en particulier d'une couche de finition, présentant un coefficient de frottement réglable, **caractérisée en ce**
**que** la composition contient
(a) un liant organique et un liant inorganique, le liant organique comprenant un polymère organique ou étant constitué d'un polymère organique, et le liant inorganique étant choisi parmi les silanes, les hydrolysats de silane, l'acide silicique colloïdal, les silicates et leurs mélanges,
(b) un lubrifiant choisi parmi le groupe comprenant les cires, les particules de matière plastique, le soufre micronisé et leurs mélanges, en quantités comprises entre 2 et 15 % en poids par rapport à la composition de revêtement, et
(c) des particules en forme de paillettes choisies parmi le groupe comprenant les paillettes métalliques, le graphène, le nitrure de bore, les paillettes de verre, les silicates stratifiés et leurs mélanges, en quantités comprises entre 4 et 12 % en poids par rapport à la composition du revêtement, et
la composition de revêtement étant exempte de composés organiques fluorés.

2. Composition de revêtement selon la revendication 1, **caractérisée en ce que** la composition de revêtement contient le liant en quantités comprises entre 6 et 40 % en poids, notamment entre 9 et 33 % en poids, de préférence entre 11 et 27 % en poids, et de manière particulièrement préférée entre 13 et 22 % en poids, par rapport à la composition de revêtement.

3. Composition de revêtement selon l'une des revendications précédentes, **caractérisée en ce que** le polymère organique est choisi parmi le groupe comprenant les acrylates, les polyuréthanes, le poly (acétate de vinyle) et leurs mélanges et copolymères.

4. Composition de revêtement selon l'une des revendications précédentes, **caractérisée en ce que** le polymère peut être obtenu à partir de monomères choisis dans le groupe constitué par l'acide acrylique, les esters de l'acide acrylique avec des alcools en C1 à C10, l'acide méthacrylique, Esters de l'acide méthacrylique avec des alcools en C1 à C10, l'acide fumarique, l'acide maléique et leurs mélanges et copolymères, en particulier l'acide acrylique, les esters de l'acide acrylique avec des alcools en C1 à C10, l'acide méthacrylique et les esters de l'acide méthacrylique avec des alcools en C1 à C10, ainsi que leurs mélanges et copolymères.

5. Composition de revêtement selon l'une des revendications précédentes, **caractérisée en ce que** le lubrifiant est choisi parmi le groupe comprenant les lubrifiants organiques, les lubrifiants inorganiques et leurs mélanges, de préférence les lubrifiants organiques.

6. Composition de revêtement selon l'une des revendications précédentes, **caractérisée en ce que** le lubrifiant est choisi parmi le groupe comprenant la polyéthercétone (PEK), la polyétheréthercétone (PEEK), le sulfure de polyphénylène (PPS), polyéthersulfone (PES), polyétherimide (PEI), polyamide-imide (PAI) et leurs mélanges, de préférence des cires.

7. Composition de revêtement selon l'une des revendications précédentes, **caractérisée en ce que** la composition de revêtement contient le lubrifiant en quantités comprises entre 3 et 12 % en poids, de préférence entre 4 et 10 % en poids, et de manière particulièrement préférée entre 4,5 et 8 % en poids, par rapport à la composition de revêtement.

8. Composition de revêtement selon l'une des revendications précédentes, **caractérisée en ce que** la composition de revêtement contient les particules en forme de plaquettes en quantités comprises entre 4 et 10 % en poids, de préférence entre 5 et 8 % en poids, par rapport à la composition de revêtement.

9. Utilisation d'une composition de revêtement selon l'une des revendications 1 à 8 en tant que couche de finition pour réaliser un revêtement à coefficient de frottement réglable sur un substrat métallique, en particulier un substrat métallique muni d'un revêtement de protection cathodique contre la corrosion.

10. Procédé de fabrication d'un revêtement dont le coefficient de frottement peut être ajusté de manière ciblée, **caractérisé en ce que**
(a) dans une première étape du procédé, on présente un substrat qui est pourvu, au moins par endroits, d'un revêtement de protection cathodique contre la corrosion,
(b) dans une deuxième étape du procédé suivant la première étape (a), on applique, au moins par endroits, sur le substrat, une composition de revêtement selon l'une des revendications 1 à 8, et
(d) au cours d'une troisième étape du procédé, qui suit la deuxième étape (b), la composition de revêtement appliquée lors de la deuxième étape (b) est séchée.

11. Procédé selon la revendication 10, **caractérisé en ce que** le coefficient de frottement du substrat revêtu est réglé dans une plage comprise entre 0,09 et 0,16, déterminé selon la norme DIN EN ISO 16047:2013-01.

12. Substrat métallique comportant un revêtement, pouvant être obtenu à l'aide d'une composition de revêtement selon l'une des revendications 1 à 8 ou selon un procédé selon l'une des revendications 10 ou 11, le revêtement contenant un lubrifiant en quantités d'au moins 4,5 % en poids, par rapport au revêtement.

13. Substrat métallique selon la revendication 12, **caractérisé en ce que** le revêtement contient le lubrifiant en quantités comprises entre 4,5 et 35 % en poids, notamment entre 5 et 30 % en poids, de préférence entre 10 et 25 % en poids, de préférence encore entre 12 et 22 % en poids, et de manière particulièrement préférée entre 15 et 20 % en poids, par rapport au revêtement.

14. Substrat métallique selon la revendication 12 ou 13, **caractérisé en ce que** le revêtement contient des particules en forme de plaquettes en quantités comprises entre 10 et 30 % en poids, de préférence entre 15 et 25 % en poids, et de préférence encore entre 17 et 22 % en poids, par rapport au revêtement.
